# EUROPEAN PATENT APPLICATION

(11) **EP 4 156 552 A1**
(43) Date of publication of application: **29.03.2023**
(21) Application number: 21831947.3
(22) Date of filing: 27.05.2021
(51) Int. Cl.: H04B 10/25

(54) **MULTI-CORE OPTICAL FIBER INTERLEAVER, OPTICAL FIBER AMPLIFIER, TRANSMISSION SYSTEM AND TRANSMISSION METHOD**

(30) Priority: 30.06.2020 CN 202010621709
(71) Applicant: Huawei Technologies Co., Ltd., Longgang District, Shenzhen, Guangdong 518129 (CN)
(72) Inventor: ZHANG, Wendou, Shenzhen, Guangdong 518129 (CN)
(74) Representative: Thun, Clemens
(86) International application number: PCT/CN2021/096273
(87) International publication number: WO 2022/001518

(57) **Abstract**

Embodiments of the present disclosure provide a multi-core fiber interleaver, an optical fiber amplifier, a transmission system, and a transmission method. The multi-core fiber interleaver includes: a first port, a second port, a third port, and a fourth port, respectively adapted to be coupled to a first multi-core fiber, a second multi-core fiber, a third multi-core fiber, and a fourth multi-core fiber. A first subset of a plurality of first cores is coupled to a first subset of a plurality of second cores. A first subset of a plurality of third cores is coupled to a first subset of a plurality of fourth cores. A second subset of the plurality of fourth cores is coupled to a second subset of the plurality of second cores. A second subset of the plurality of third cores is coupled to a second subset of the plurality of first cores. The multi-core fiber interleaver in the present disclosure can be used to advantageously implement the optical fiber amplifier for bidirectional transmission and a single-fiber fiber transmission system.

## Description

This application claims priority to Chinese Patent Application No. 202010621709.9, filed with the China National Intellectual Property Administration on June 30, 2020 and entitled "MULTI-CORE FIBER INTERLEAVER, OPTICAL FIBER AMPLIFIER, TRANSMISSION SYSTEM, AND TRANSMISSION METHOD", which is incorporated herein by reference in its entirety.

### TECHNICAL FIELD

Embodiments of the present disclosure relate to the fiber field, and more specifically, to a multi-core fiber interleaver, a multi-core fiber amplifier, a single-fiber bidirectional transmission system, and a multi-core fiber transmission method.

### BACKGROUND

With development of fiber communications system technologies and products, a single-fiber capacity is close to a Shannon limit, and a bottleneck occurs during continuous increase of the capacity. Several data signals are multiplexed, through space-division multiplexing (SDM), into cores of a multi-core fiber, modes of a few-mode fiber, or a few-mode multi-core fiber obtained by combining the two, so that diversity of a spatial channel is utilized, thereby increasing a channel capacity in optical communication. A spatial domain and a modal domain are considered as two branches in the direction of the space-division multiplexing technology. In terms of the modal domain direction, although it is relatively easy to design and produce a fiber, implementation complexity of a multiple input multiple output (MIMO) receiver circuit/chip at a receive end is extremely high due to dispersion of various optical components and modes used on a link, and related mode-division multiplexing components are still far from mature. The spatial-domain space-division multiplexing direction represented by multi-core fibers is increasingly valued, and is gradually advanced to industrial maturity. The spatial domain and the modal domain may also be used together in theory. However, all problems of the two technical branches need to be resolved, and therefore a technical implementation is most complex.

### SUMMARY

The present disclosure is intended to provide at least a multi-core fiber interleaver, an optical fiber amplifier based on the multi-core fiber interleaver, a multi-core fiber transmission system, and a corresponding method. The multi-core fiber interleaver, the optical fiber amplifier, and the multi-core fiber transmission system in the present disclosure can implement single-fiber bidirectional transmission, to overcome a technical problem of a single-fiber capacity increase faced by a future fiber transmission system.

A first aspect of the present disclosure provides a multi-core fiber interleaver. The multi-core fiber interleaver may include a first port, a second port, a third port, and a fourth port. The first port, the second port, the third port, and the fourth port are respectively adapted to be coupled to a first multi-core fiber, a second multi-core fiber, a third multi-core fiber, and a fourth multi-core fiber outside the multi-core fiber interleaver. A first subset of a plurality of first cores of the first multi-core fiber at the first port is coupled to a first subset of a plurality of second cores of the second multi-core fiber at the second port. A first subset of a plurality of third cores of the third multi-core fiber at the third port is coupled to a first subset of a plurality of fourth cores of the fourth multi-core fiber at the fourth port. A second subset of the plurality of fourth cores of the fourth multi-core fiber at the fourth port is coupled to a second subset of the plurality of second cores of the second multi-core fiber at the second port. A second subset of the plurality of third cores of the third multi-core fiber at the third port is coupled to a second subset of the plurality of first cores of the first multi-core fiber at the first port. The first subsets of the multi-core fibers include a same quantity of cores, and the second subsets of the multi-core fibers include a same quantity of cores.

It should be understood that bidirectional transmission of a single multi-core fiber amplifier becomes possible due to the multi-core fiber interleaver in the present disclosure. In addition, the multi-core fiber interleaver in the present disclosure has a simple structure, and is easy to produce.

In some embodiments, the quantity of cores included in the first subsets of the multi-core fibers may also be equal to the quantity of cores included in the second subsets of the multi-core fibers. This means that uplink and downlink transmission can be implemented by using a same quantity of communications channels.

In some embodiments, cores in a first subset and cores in a second subset of a same multi-core fiber may be located at alternate positions, or cores in a first subset or cores in a second subset of a same multi-core fiber are not adjacent to each other. In this way, crosstalk between adjacent cores for co-directional transmission can be reduced.

In some embodiments, a sum of a quantity of cores in the first subset and a quantity of cores in the second subset of the same multi-core fiber may be less than or equal to a total quantity of cores included in the same multi-core fiber. When the sum of the quantity of cores in the first subset and the quantity of cores in the second subset of the same multi-core fiber is less than the total quantity of cores included in the same multi-core fiber, the same multi-core fiber is allowed to include cores in a third subset other than the first subset and the second subset, so that an auxiliary communications signal can be transmitted.

In some embodiments, the first subset of the plurality of first cores may be fanned out at the first port, and may be coupled, directly or by using a first auxiliary interleaving component, to the first subset of the plurality of second cores that is fanned out at the second port. The first subset of the plurality of third cores may be fanned out at the third port, and may be coupled, directly or by using a second auxiliary interleaving component, to the first subset of the plurality of fourth cores that is fanned out at the fourth port. The second subset of the plurality of first cores is fanned out at the first port, and is coupled, directly or by using a third auxiliary interleaving component, to the second subset of the plurality of third cores that is fanned out at the third port. The second subset of the plurality of fourth cores is fanned out at the fourth port, and is coupled, directly or by using a fourth auxiliary interleaving component, to the second subset of the plurality of second cores that is fanned out at the second port. In this way, interleaving between cores at the ports can be simply implemented.

In some embodiments, the first auxiliary interleaving component, the second auxiliary interleaving component, the third auxiliary interleaving component, and the fourth auxiliary interleaving component may be selected from a group including a single-core fiber, a spatial waveguide chip, and a spatial optical path structure. In these embodiments, the plurality of auxiliary interleaving components can provide flexibility and freedom of interleaving operations.

In some embodiments, the first multi-core fiber and the fourth multi-core fiber may include a same quantity of cores, and the second multi-core fiber and the third multi-core fiber may include a same quantity of cores. In these embodiments, the first multi-core fiber and the fourth multi-core fiber may include a different quantity of cores from the second multi-core fiber and the third multi-core fiber, and an additional quantity of cores may be, for example, used as auxiliary communications channel.

In some embodiments, the first multi-core fiber, the second multi-core fiber, the third multi-core fiber, and the fourth multi-core fiber may include a same quantity of cores, and the quantity of cores ranges from 2 to 30. In these embodiments, the multi-core fiber interleaver can have a wide application scope.

In some embodiments, the multi-core fiber interleaver may further include at least one of the following: a fifth port, where a third subset of the plurality of first cores of the first multi-core fiber is adapted to be coupled out from the multi-core interleaver by using the fifth port; and a sixth port, where a third subset of the plurality of fourth cores of the fourth multi-core fiber is adapted to be coupled out from the multi-core fiber interleaver by using the sixth port. In this manner, cores in the third subsets of the first multi-core fiber and the fourth multi-core fiber can be used to implement auxiliary communications channels.

A second aspect of the present disclosure provides a multi-core fiber amplifier. The amplifier may include the multi-core fiber interleaver according to the first aspect and a gain medium. The gain medium is coupled between the second port and the third port. The first port and the fourth port are adapted to be respectively used as a first input/output port and a second input/output port of the multi-core fiber amplifier. An optical signal is adapted for bidirectional transmission between the first input/output port and the second input/output port of the multi-core fiber amplifier, and is adapted for gain amplification performed by the gain medium.

It should be understood that the multi-core fiber amplifier in the present disclosure can implement bidirectional transmission of a single multi-core fiber amplifier, to establish a single-fiber fiber transmission system.

In some embodiments, the gain medium may include a doped multi-core fiber. In this way, gain amplification of an optical signal coupled out from the multi-core fiber can be conveniently implemented.

In some embodiments, the multi-core fiber amplifier may further include a first pump/signal wavelength division multiplexer. The first pump/signal wavelength division multiplexer is coupled between the second port and the gain medium, and is configured to receive pump light from a first pump laser. In these embodiments, gain amplification of an optical signal coupled out from the second port can be conveniently implemented.

In some embodiments, the multi-core fiber amplifier may further include a second pump/signal wavelength division multiplexer. The second pump/signal wavelength division multiplexer is coupled between the gain medium and the third port, and is configured to couple out residual pump light coming from the first pump laser. This can avoid adverse impact of the residual pump light.

In some embodiments, the multi-core fiber amplifier may further include a first optical isolator. The first optical isolator is coupled between the third port and the gain medium, and is configured to unidirectionally isolate light transmitted from the third port to the gain medium. In these embodiments, impact of reflected light on a performance indicator of the gain medium can be avoided.

In some embodiments, the multi-core fiber amplifier may further include a second optical isolator. The second optical isolator is coupled between the second port and the gain medium, and is configured to unidirectionally isolate light transmitted from the gain medium to the second port. In this way, reverse ASE noise light generated by the gain medium can be prevented from being leaked from an input end.

In some embodiments, the multi-core fiber amplifier may further include a first probe/coupler and/or a second probe/coupler. The first probe/coupler is coupled between the second port and the gain medium to detect light output from the second port. The second probe/coupler is coupled between the third port and the gain medium to detect light coupled in to the third port. In this way, detection of input light and amplified output light can be conveniently implemented.

In some embodiments, the multi-core fiber amplifier may further include a gain flattening filter. The gain flattening filter is coupled between the gain medium and the third port. In these embodiments, the gain flattening filter helps basically equalize wavelength related gains of the gain medium of the amplifier for signals to be basically consistent.

In some embodiments, the multi-core fiber interleaver may include the fifth port adapted to couple out the third subset of the plurality of first cores and a sixth port adapted to couple out the third subset of the plurality of fourth cores. The fifth port and the sixth port are adapted to be used as a first auxiliary communications port and a second auxiliary communications port of the multi-core fiber amplifier. In these embodiments, optical signals coupled from the first auxiliary communications port and the second auxiliary communications port may be used, for example, to control or communicate with another related network element device (for example, a downstream network element device).

A third aspect of the present disclosure provides a single-fiber bidirectional transmission system. The system may include an optical amplifier site. The optical amplifier site includes the multi-core fiber amplifier according to any one of the second aspect, a first optical terminal site, and a second optical terminal site. The optical amplifier site is disposed in series between the first optical terminal site and the second optical terminal site by using a single fiber. An optical signal is adapted for bidirectional transmission between the first optical terminal site and the second optical terminal site by using the optical amplifier site.

It should be understood that due to the multi-core fiber amplifier in the present disclosure, the fiber bidirectional transmission system in the present disclosure can advantageously implement bidirectional transmission of optical signals by using a single fiber. In addition, because single-fiber transmission is used, it is ensured that latencies of an uplink and a downlink are consistent, so that a problem of inconsistent bidirectional latencies caused by a dual-fiber fiber connection in the conventional technology is avoided.

In some embodiments, the first optical terminal site and the second optical terminal site each may include at least one of a multiplexer, a demultiplexer, and an optical transponder unit. In these embodiments, the optical terminal site can send and receive optical signals.

In some embodiments, there may be a plurality of optical amplifier sites, the plurality of optical amplifier sites are connected in series by using a single fiber, and each optical amplifier site includes a single multi-core fiber amplifier. These optical amplifier sites can implement trunk amplification of optical signals.

A fourth aspect of the present disclosure provides a multi-core fiber interleaving method. The method includes: coupling a first subset of a plurality of first cores of a first multi-core fiber to a first subset of a plurality of second cores of a second multi-core fiber; coupling a first subset of a plurality of third cores of a third multi-core fiber to a first subset of a plurality of fourth cores of a fourth multi-core fiber; coupling a second subset of the plurality of first cores to a second subset of the plurality of third cores; and coupling a second subset of the plurality of fourth cores to a second subset of the plurality of second cores. The first subsets of the multi-core fibers include a same quantity of cores, and the second subsets of the multi-core fibers include a same quantity of cores. In this way, interleaving of a plurality of multi-core fibers can be implemented.

In some embodiments, the method further includes: coupling the first subset of the plurality of second cores to the first subset of the plurality of third cores by using a gain medium, and coupling the second subset of the plurality of second cores to the second subset of the plurality of third cores by using the gain medium. In these embodiments, gain amplification of input light by using the gain medium can be implemented due to the gain medium.

A fifth aspect of the present disclosure provides an optical amplification method applicable to a multi-core fiber. The optical amplification method includes: receiving a first optical signal by using a first subset of a first multi-core fiber; transmitting the first optical signal to a first subset of a second multi-core fiber; transmitting the first optical signal coming from the first subset of the second multi-core fiber to a first subset of a third multi-core fiber by using a gain medium; transmitting the amplified first optical signal to a first subset of a fourth multi-core fiber; and outputting the amplified first optical signal by using the first subset of the fourth multi-core fiber. The first subsets of the multi-core fibers include a same quantity of cores. In this interleaving manner, gain amplification of the optical signal from the first multi-core fiber to the fourth multi-core fiber can be implemented.

In some embodiments, the method may further include: receiving a second optical signal by using a second subset of the fourth multi-core fiber, where a transmission direction of the second optical signal is opposite to a transmission direction of the first optical signal; transmitting the second optical signal to a second subset of the second multi-core fiber; transmitting the second optical signal coming from the second subset of the second multi-core fiber to a second subset of the third multi-core fiber by using the gain medium; transmitting the amplified second optical signal to a second subset of the first multi-core fiber; and outputting the amplified second optical signal by using the second subset of the first multi-core fiber. The second subsets of the multi-core fibers include a same quantity of cores. In this interleaving manner, gain amplification of the optical signal from the fourth multi-core fiber to the first multi-core fiber can be further implemented.

In some embodiments, the method may further include: receiving, by using a third subset of the first multi-core fiber, a third optical signal used as an auxiliary communications signal, where the third subset of the first multi-core fiber does not intersect with the first subset or the second subset of the first multi-core fiber; and/or receiving, by using a third subset of the fourth multi-core fiber, a fourth optical signal used as an auxiliary communications signal. The third subset of the fourth multi-core fiber does not intersect with the first subset or the second subset of the fourth multi-core fiber. In these embodiments, the third subset of the first multi-core fiber and the third subset of the fourth multi-core fiber can implement transmission of auxiliary optical communications signals.

A sixth aspect of the present disclosure provides a single-fiber bidirectional transmission method. The method may include: transmitting a first optical signal from a first optical terminal site to an optical amplifier site; and transmitting the amplified first optical signal from the optical amplifier site to a second optical terminal site. The optical amplifier site is disposed in series between the first optical terminal site and the second optical terminal site by using a single fiber, and the optical amplifier site includes the multi-core fiber amplifier according to any one of the second aspect. According to this method, due to the multi-core fiber amplifier in the present disclosure, an optical signal can be transmitted in a first direction by using a single fiber.

In some embodiments, the method may further include: transmitting a second optical signal from the second optical terminal site to the optical amplifier site; and transmitting the amplified second optical signal from the optical amplifier site to the second optical terminal site. In this way, an optical signal can be transmitted in a second direction opposite to the first direction by using a single fiber.

It should be understood that the content described in the summary is not intended to limit key or important features of embodiments of the present disclosure or limit the scope of the present disclosure. Other features of embodiments of the present disclosure will be readily understood by using the following descriptions.

### BRIEF DESCRIPTION OF DRAWINGS

With reference to the accompanying drawings and the following detailed descriptions, the foregoing and other features, advantages, and aspects of embodiments of the present disclosure will become more apparent. In the accompanying drawings, same or similar reference numerals denote same or similar elements.
FIG. 1 is a schematic diagram of a structure of a conventional first-type multi-core fiber amplifier;
FIG. 2 is a schematic diagram of a structure of a conventional second-type multi-core fiber amplifier;
FIG. 3 is a schematic diagram of application of a conventional multi-core fiber amplifier to a fiber communications system;
FIG. 4 is a schematic diagram of a structure of a multi-core fiber amplifier according to a first embodiment of the present disclosure;
FIG. 5 is a schematic diagram of interleaving of a first example of a multi-core fiber interleaver used in a multi-core fiber amplifier according to an example embodiment of the present disclosure;
FIG. 6a is a schematic diagram of interleaving of a second example of a multi-core fiber interleaver according to an example embodiment of the present disclosure;
FIG. 6b is a schematic diagram illustrating, in another manner, interleaving of the second example of the multi-core fiber interleaver shown in FIG. 6a;
FIG. 7 is a schematic diagram illustrating, in a core fan-out manner, interleaving of a variant example of the multi-core fiber interleaver shown in FIG. 6b;
FIG. 8 is a schematic diagram of a first variation of an example embodiment of the multi-core fiber amplifier shown in FIG. 4;
FIG. 9 is a schematic diagram of a second variation of an example embodiment of the multi-core fiber amplifier shown in FIG. 4;
FIG. 10 shows application of a multi-core fiber amplifier to a fiber communications system according to an example embodiment of the present disclosure;
FIG. 11 is a schematic flowchart of a multi-core fiber interleaving method according to an example embodiment of the present disclosure;
FIG. 12 is a schematic flowchart of an optical amplification method applicable to a multi-core fiber according to an example embodiment of the present disclosure; and
FIG. 13 is a schematic flowchart of a single-fiber bidirectional transmission method applicable to a multi-core fiber according to an example embodiment of the present disclosure.

### DESCRIPTION OF EMBODIMENTS

**Descriptions of terms:**

| English acronym/abbreviation | Full English expression/standard English term | Chinese expression/Chinese term |
|---|---|---|
| SDM | Space-division multiplexing | Space-division multiplexing |
| MIMO | Multiple input multiple output | Multiple input multiple output |
| SISO | Single input single output | Single input single output |
| FI/FO | Fan in/fan out | Fan in/fan out |
| OTU | Optical transponder unit | Optical transponder unit |
| MUX | Multiplexer | Multiplexer |
| DMUX | Demultiplexer | Demultiplexer |
| OA | Optical fiber amplifier | Optical fiber amplifier |
| MCF | Multi-core fiber | Multi-core fiber |
| SCF | Single-core fiber | Single-core fiber |
| OTDR | Optical time-domain reflectometer | Optical time-domain reflectometer |
| DCN | Data communications network | Data communications network |

The following further describes embodiments of the present disclosure in detail with reference to the accompanying drawings. Although some embodiments of the present disclosure are shown in the accompanying drawings, it should be understood that the present disclosure can be implemented in various forms, and should not be construed as being limited to the embodiments described herein, and instead, these embodiments are provided for a more thorough and complete understanding of the present disclosure. It should be understood that the accompanying drawings and embodiments of the present disclosure are merely used for the purpose of illustrating examples, and are not intended to limit the protection scope of the present disclosure.

In the fiber communications field, multi-core fibers are increasingly valued by technicians as a representative of spatial-domain space-division multiplexing. A multi-core fiber amplifier is a core component for constructing a fiber communications system. The multi-core fiber amplifier is suitable for performing gain amplification on light transmitted by the multi-core fiber, to implement long-distance communications transmission of a fiber. It should be noted herein that the multi-core fiber in this specification is a fiber with a plurality of cores in same cladding, and is different from a ribbon fiber (Ribbon fiber). The ribbon fiber is a group (or ribbon) of fibers obtained by bonding a plurality of fibers using a special material (for example, glue), and is also referred to as a fiber bundle/cable. In addition, when contexts do not conflict with each other, the multi-core fiber in this specification may be any multi-core fiber including two or more cores, and includes but is not limited to a multi-core fiber including four cores, six cores, seven cores, twelve cores, thirteen cores, nineteen cores, or the like.

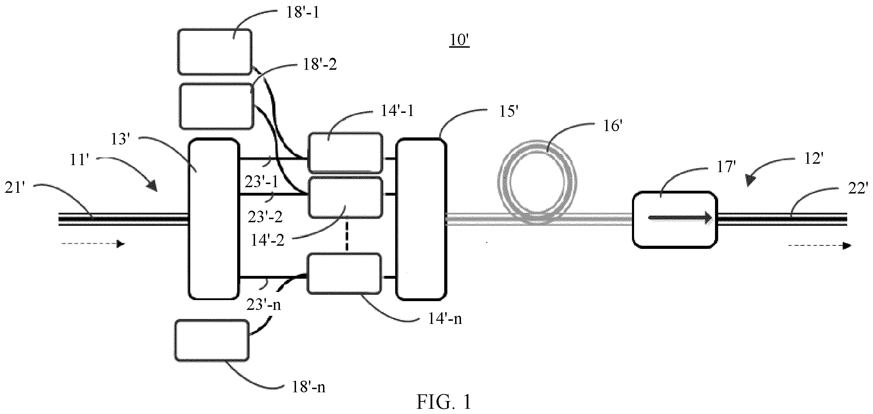

FIG. 1 is a schematic diagram of a structure of a conventional first-type multi-core fiber amplifier 10'. It should be understood that a principle of the first-type multi-core fiber amplifier is that a plurality of cores of a multi-core fiber are first demultiplexed into a plurality of single-mode single-core fibers, then pump light and signal light are multiplexed on the single-mode single-core fibers and then multiplexed into the multi-core fiber by using a core multiplexer, and finally, the multiplexed pump light and signal light enter a doped multi-core fiber for amplification.

Specifically, as shown in FIG. 1, the conventional multi-core fiber amplifier 10' may include a multi-core fiber input end 11' and a multi-core fiber output end 12', and the multi-core fiber input end 11' and the multi-core fiber output end 12' are respectively adapted to be coupled to a first multi-core fiber 21' used as an input fiber and a second multi-core fiber 22' used as an output fiber. The first multi-core fiber 21' and the second multi-core fiber 22' may be separately adapted to transmit a plurality of signals on which space-division multiplexing is performed.

The first multi-core fiber 21' is connected to a multi-core fiber fan-out device 13' at thefirst port 11' used as the input end, and the multi-core fiber fan-out device 13' fans out the first multi-core fiber 21' as a plurality of single-core fibers 23'-1, ..., and 23'-n.

Pump/signal wavelength division multiplexers 14'-1, ..., and 14'-n may be respectively connected to the plurality of single-core fibers 23'-1, ..., and 23'-n, and may be adapted to respectively couple pump light output from pump lasers 18'-1, ..., and 18'-n by using the single-core fibers and signal light in the plurality of single-core fibers 23'-1, ..., and 23'-n together. The pump light is used to enable a gain medium (for example, erbium-doped ions) in a subsequent doped multi-core fiber 16' to absorb the pump light, to amplify the signal light.

To couple the pump/signal wavelength division multiplexers 14'-1, ..., and 14'-n to the doped multi-core fiber 16', the pump/signal wavelength division multiplexers 14'-1, ..., and 14'-n are first coupled to the multi-core fiber fan-in device 15', and then the multi-core fiber fan-in device 15' is coupled to the doped multi-core fiber 16', to implement gain amplification of light.

The doped multi-core fiber 16' may be coupled to the second port 12' used as the output end by using an optical isolator 17'. The optical isolator 17' may cause light to unidirectionally pass through a component, to isolate impact of light reflected by the output end of the amplifier.

A signal flow of the multi-core fiber amplifier 10' is summarized as follows:
Signal light coming from an upstream transmission fiber or transmission device is input from the input end 11' by using the first multi-core fiber 21', and then sequentially passes through the multi-core fiber fan-out device 13', the pump/signal wavelength division multiplexers 14'-1, ..., and 14'-n, and the multi-core fiber fan-in device 15' to enter the doped multi-core fiber 16' for amplification. Then the amplified light passes through the optical isolator 17', and is output from the output end 12' by using the second multi-core fiber 22', to enter and be received by a downstream transmission fiber or transmission device. In addition, the pump light output from the plurality of pump light sources 18'-1, ..., and 18'-n may pass through the pump/signal wavelength division multiplexers 14'-1, ..., and 14'-n and the multi-core fiber fan-in device 15' to enter the doped multi-core fiber 16' for absorption.

However, the first-type multi-core fiber amplifier 10' has the following disadvantage: The first-type multi-core fiber amplifier 10' can support only a fiber communications system in which a plurality of beams of signal light are transmitted in a same direction. In addition, if the transmission device performs reception in a SISO manner, a multi-core fiber needs to be designed, and a distance between cores of the multi-core fiber needs to be sufficiently large to avoid signal coupling crosstalk between the cores. This means that a maximum quantity of cores in a fiber in a case of same dimensions is limited. In addition, if the distance between the cores can be shortened to pursue a single-fiber capacity, but the transmission device needs to perform reception in a MIMO manner, a larger quantity of cores indicates a larger MIMO matrix required. Consequently, component, algorithm, and chip complexity exponentially increases with a scale of the MIMO matrix, bringing disadvantages in power consumption, a latency, integration, and other aspects.

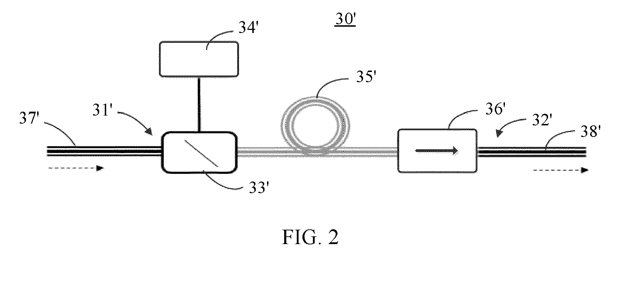

FIG. 2 is a schematic diagram of a structure of a conventional second-type multi-core fiber amplifier 30'. It should be understood that a principle of the second-type multi-core fiber amplifier 30' is a technical solution in which pump light and a signal are coupled together based on multi-core pump and signal wavelength division multiplexing, and then are multiplexed by using a spatial core multiplexer, to enter a doped fiber for amplification.

Specifically, as shown in FIG. 2, the multi-core fiber amplifier 30' may include a multi-core fiber input end 31' and a multi-core fiber output end 32', and the multi-core fiber input end 31' and the multi-core fiber output end 32' are respectively adapted to be coupled to a first multi-core fiber 37' used as an input fiber and a second multi-core fiber 38' used as an output fiber. The first multi-core fiber 37' and the second multi-core fiber 38' are adapted to transmit a plurality of signals on which space-division multiplexing is performed.

A pump/signal wavelength division multiplexer 33' may be directly connected to the first multi-core fiber 37', and may be adapted to receive pump light output from a pump laser 34' by using a single-core fiber, and couple and multiplex a plurality of beams of signal light in the first multi-core fiber 37' and pump light in the single-core fiber, or demultiplex the pump light and the signal light.

The multi-core fiber amplifier 30' further includes a doped dual-cladding multi-core fiber 35', and the doped dual-cladding multi-core fiber 35' is coupled to an output end of the pump/signal wavelength division multiplexer 33'. Cores of the doped dual-cladding multi-core fiber 35' are covered by inner cladding. The cores provide doped ions (for example, erbium-doped ions), and the doped ions can absorb pump light, and then amplify input signal light. The inner cladding is configured to couple and transmit multi-mode pump light, and the pump light is absorbed by the doped ions when passing through the cores in the inner cladding.

A multi-core fiber optical isolator 36' is coupled to the doped dual-cladding multi-core fiber 35', and as a unidirectional pass-through component of light, the multi-core fiber optical isolator 36' may be configured to isolate impact of light reflected by the output end of the amplifier.

A signal flow of the multi-core fiber amplifier 30' is as follows:
Signal light coming from a transmission fiber or a transmission device is input from the input end 31' by using the first multi-core fiber 37', and then passes through the pump/signal wavelength division multiplexer 33' to enter the cores of the doped dual-cladding fiber 35' for amplification. Then the amplified light passes through the optical isolator 36', and is output from the output end 32' by using the second multi-core fiber 38', to enter and be received by a downstream transmission fiber or transmission device. In addition, the pump light output from the pump laser 34' may be input from a pump input end of the pump/signal wavelength division multiplexer 33', and then may enter the inner cladding of the doped dual-cladding fiber 35' for transmission. When passing through the cores of the doped dual-cladding fiber 35', the pump light can be absorbed by the doped ions.

However, the second-type multi-core fiber amplifier 30' has the following disadvantage: Similar to the first-type multi-core fiber amplifier 10', the second-type multi-core fiber amplifier 30' can support only a fiber communications system in which a plurality of beams of signal light are transmitted in a same direction. In addition, similarly, if the transmission device performs reception in a SISO manner, a distance between cores of the multi-core fiber needs to be sufficiently large through control, to avoid inter-core signal coupling crosstalk. This means that a maximum quantity of cores is limited. If the transmission device performs reception in a MIMO manner, a larger MIMO matrix is required, causing disadvantages in component and chip complexity, power consumption, a latency, integration, and other aspects.

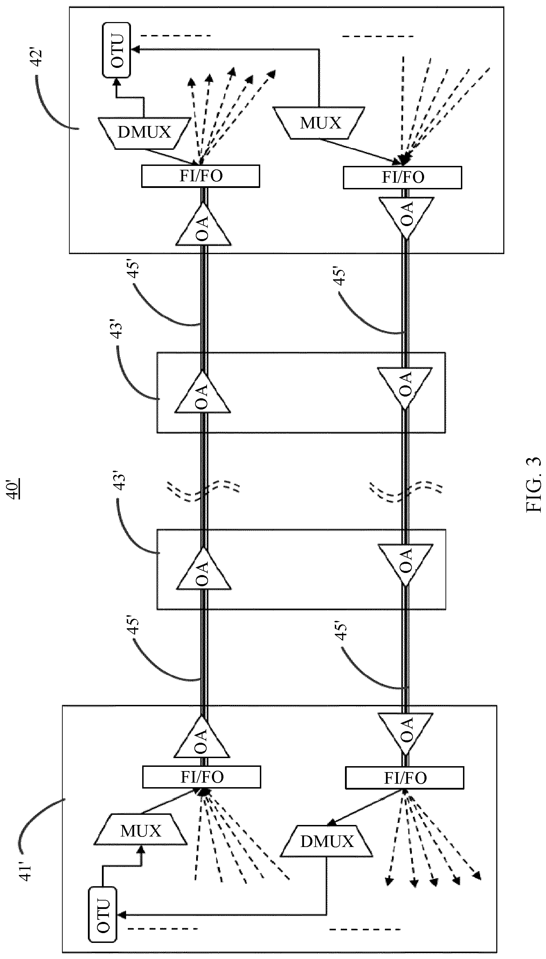

To more clearly understand the fiber communications systems supported by the first-type multi-core fiber amplifier 10' and the second-type multi-core fiber amplifier 30', FIG. 3 is a schematic diagram of application of a conventional multi-core fiber amplifier to a fiber communications system 40'.

As shown in FIG. 3, the fiber communications system 40' may include a first optical terminal site 41', a second optical terminal site 42', and at least one optical amplifier site 43' located between the first optical terminal site 41' and the second optical terminal site 42'. The optical amplifier site 43' may include either type of optical amplifier (OA) in the first-type multi-core fiber amplifier 10' and the second-type multi-core fiber amplifier 30'. The first optical terminal site 41' and the second optical terminal site 42' each may include a multiplexer (MUX), a demultiplexer (DMUX), a fiber fan-in/fan-out device (FI/FO), an optical transponder unit (OTU), an optical amplifier (OA) such as the first-type multi-core fiber amplifier 10' or the second-type multi-core fiber amplifier 30', and the like.

It should be understood that the first-type multi-core fiber amplifier 10' or the second-type multi-core fiber amplifier 30' can support only co-directional transmission of optical signals. Therefore, to implement bidirectional transmission of the fiber communications system 40', two fibers 45' and 46' used for an uplink and a downlink need to be laid, and respective optical fiber amplifiers are used for the fibers 45' and 46' on the links. In other words, even when a quantity of services actually carried during initial operation is small, two sets of optical amplifier devices are required in east-west directions. As a result, an initial investment of the system increases.

The present disclosure is intended to provide a multi-core fiber amplifier that can support bidirectional transmission, to avoid using two sets of optical amplifier devices in a fiber communications system, so that construction costs of the fiber communications system can be greatly reduced.

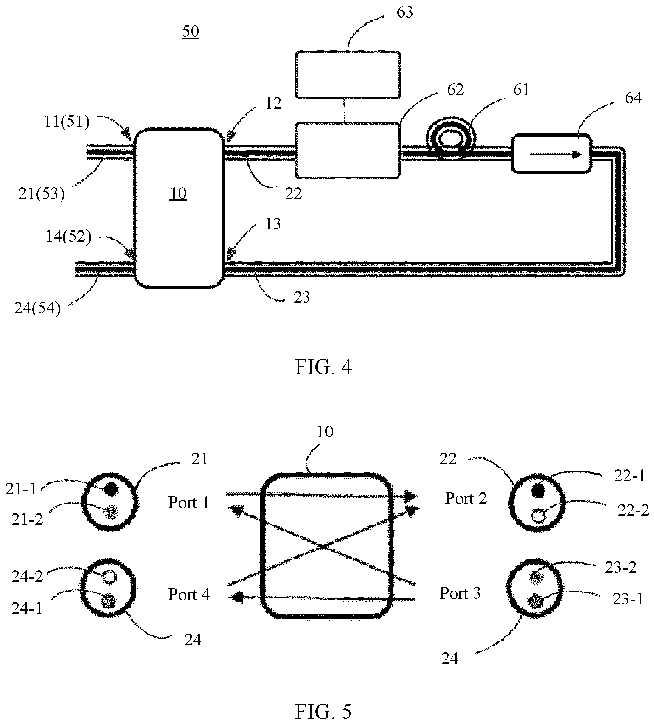

FIG. 4 is a schematic diagram of a structure of a multi-core fiber amplifier 50 that can support bidirectional transmission according to a first embodiment of the present disclosure.

As shown in FIG. 4, the multi-core fiber amplifier 50 may include a first input/output port 51 and a second input/output port 52. The first input/output port 51 may be connected to a first multi-core transmission fiber 53 to receive/output signal light, and the second input/output port 52 may be, for example, connected to a second multi-core transmission fiber 54 to output/receive signal light.

To implement a function of supporting bidirectional transmission of optical signals by the multi-core fiber amplifier 50, the multi-core fiber amplifier 50 specifically includes a multi-core fiber interleaver 10. It should be understood that bidirectional transmission of the multi-core fiber amplifier 50 becomes possible exactly due to the multi-core fiber interleaver 10.

The multi-core fiber interleaver 10 may include a first port 11, a second port 12, a third port 13, and a fourth port 14, and the first port 11, the second port 12, the third port 13, and the fourth port 14 may be respectively coupled to a first multi-core fiber 21, a second multi-core fiber 22, a third multi-core fiber 23, and a fourth multi-core fiber 24. The first port 21 may be used as the foregoing first input/output port 51, and the fourth port 24 may be used as the foregoing second input/output port 52. The first multi-core fiber 21 may be directly used as the foregoing first multi-core transmission fiber 53 of the multi-core fiber amplifier 50, and the fourth multi-core fiber 24 may be directly used as the foregoing second multi-core transmission fiber 54 of the multi-core fiber amplifier 50. Further, the second port 22 needs to be connected to the third port 23 by using a gain medium 61. For example, the gain medium 61 can amplify an optical signal passing through the gain medium 61, to achieve optical output that is of the multi-core fiber amplifier and that is obtained through gain amplification.

The multi-core fiber interleaver 10 has the following design concept: A first subset of a plurality of cores of the first multi-core fiber 21 coupled to the first port 21 is coupled, through interleaving, to a first subset of a plurality of cores of the second multi-core fiber 21 coupled to the second port 12, and a first subset of a plurality of cores of the fourth multi-core fiber 24 coupled to the fourth port 24 is coupled to a first subset of the third multi-core fiber 23 coupled to the third port 13. In addition, a second subset of the plurality of cores of the first multi-core fiber 21 is coupled to a second subset of the third multi-core fiber 23 coupled to the third port 13, and a second subset of the plurality of cores of the fourth multi-core fiber 24 coupled to the fourth port 24 is coupled to a second subset of the second multi-core fiber 22 coupled to the second port 12. The first subsets of the multi-core fibers include a same quantity (for example, a first quantity) of cores, and the second subsets of the multi-core fibers include a same quantity (for example, a second quantity) of cores. It should be understood that a single-fiber optical fiber amplifier and a subsequent single-fiber fiber transmission system can be implemented by using the multi-core fiber interleaver.

To more clearly understand the design concept of the multi-core fiber interleaver 10, the following describes an interleaving structure of the multi-core fiber interleaver 10 in detail only by using two-core fibers, six-core fibers, and seven-core fibers as examples. It should be understood that the multi-core fiber interleaver 10 in the present disclosure is not limited to interleaving examples of the two-core fibers, the six-core fibers, and the seven-core fibers shown below, but is applicable to a multi-core fiber including any quantity of cores, in other words, is applicable to a fiber with two or more cores.

FIG. 5 is a schematic diagram of interleaving of the multi-core fiber interleaver 10 using two-core fibers as an example. As shown in FIG. 5, in the case of the two-core fibers, the first multi-core fiber 21 is coupled to the first port 11, the second multi-core fiber 22 is coupled to the second port 12, the third multi-core fiber 23 is coupled to the third port 13, and the fourth multi-core fiber 24 is coupled to the fourth port 14. For example, the first multi-core fiber 21 may include two cores 21-1 and 21-2, the second multi-core fiber 22 may include two cores 22-1 and 22-2, the third multi-core fiber 23 may include two cores 23-1 and 23-2, and the fourth multi-core fiber 24 may include two cores 24-1 and 24-2.

In the example of the two-core fibers, for example, interleaving may be implemented in the following manner: The core 21-1 (used as the first subset of the plurality of cores of the first multi-core fiber 21) in the two cores of the first multi-core fiber 21 is coupled to the core 22-1 (used as the first subset of the plurality of cores of the second multi-core fiber 22) of the second multi-core fiber 22, and the core 24-1 (used as the first subset of the plurality of cores of the fourth multi-core fiber 24) of the fourth multi-core fiber 24 is coupled to the core 23-1 (used as the first subset of the plurality of cores of the third multi-core fiber 23) of the third multi-core fiber 23. In addition, the core 21-2 (used as the second subset of the plurality of cores of the first multi-core fiber 21) of the first multi-core fiber 21 is coupled to the core 23-2 (used as the second subset of the plurality of cores of the third multi-core fiber 23) of the third multi-core fiber 23, and the core 24-2 (used as the second subset of the plurality of cores of the fourth multi-core fiber 24) of the fourth multi-core fiber 24 is coupled to the core 22-2 (used as the second subset of the plurality of cores of the second multi-core fiber 22) of the second multi-core fiber 22.

When a two-core fiber interleaver is used as the multi-core fiber interleaver 10, the multi-core fiber amplifier 50 in FIG. 4 may be further disposed as follows: The core 22-1 (namely, the first subset of the second multi-core fiber 22) of the second multi-core fiber 22 is connected to the core 23-1 (namely, the first subset of the third multi-core fiber 23) of the third multi-core fiber 23 by using the gain medium 61 outside the multi-core fiber interleaver 10. In addition, the core 22-2 (namely, the second subset of the second multi-core fiber 22) of the second multi-core fiber 22 is connected to the core 23-2 (namely, the second subset of the third multi-core fiber 23) of the third multi-core fiber 23 by using the gain medium 61 outside the multi-core fiber interleaver 10.

When the first port 21 is used as an input port, the fourth port 24 is used as an output port, and the core 21-1 of the first multi-core fiber is used as a signal input core, an optical signal flow may be transmitted along the following first optical transmission path: the core 21-1 located at the first port 11 -> the core 22-1 located at the second port 12 -> the gain medium 61 located outside the interleaver 50 -> the core 23-1 located at the third port 13 -> the core 24-1 located at the fourth port 14.

On the contrary, when the first port 21 is used as an output port, the fourth port 24 is used as an input port, and the core 24-2 of the fourth multi-core fiber is used as a signal input core, an optical signal flow may be transmitted along the following second optical transmission path: the core 24-2 located at the fourth port 14 -> the core 22-2 located at the second port 12 -> the gain medium 61 located outside the interleaver 50 -> the core 23-2 located at the third port 13 -> the core 21-2 located at the first port 11.

It can be learned from the foregoing descriptions that the first optical transmission path and the second optical transmission path are opposite when viewed from the outside of the multi-core fiber interleaver and the gain medium as a whole, but optical signals travel along a same path in the gain medium for gain amplification from the perspective of the inside. In addition, it should be further understood that optical signal transmission along the first optical transmission path and the second optical transmission path may be performed at the same time, because a first subset and a second subset limited to a same multi-core fiber do not intersect with each other, and therefore, different cores are used for transmission along the first optical transmission path and the second optical transmission path.

To implement interleaving between cores at different ports, in some embodiments, a corresponding core may be directly fanned out at each port, and cores at different ports may be directly coupled (for example, welded) together. For example, a core (for example, 21-1) used as the first subset of the plurality of first cores may be fanned out at the first port 11, and may be directly coupled to the core (for example, 22-1) that is used as the first subset of the plurality of second cores and that is fanned out at the second port 12. Furthermore, a core (for example, 23-1) used as the first subset of the plurality of third cores may be fanned out at the third port 13, and may be directly coupled to the core (for example, 24-1) that is used as the first subset of the plurality of fourth cores and that is fanned out at the fourth port 14. In addition, a core (for example, 21-2) used as the second subset of the plurality of first cores may be fanned out at the first port 11, and may be directly coupled to a core (for example, 23-2) that is used as the second subset of the plurality of third cores and that is fanned out at the third port 13. Furthermore, a core (for example, 24-2) used as the second subset of the plurality of fourth cores may be fanned out at the fourth port 14, and may be directly coupled to a core (for example, 22-2) that is used as the second subset of the plurality of second cores and that is fanned out at the second port 12. This direct coupling manner makes interleaving relatively simple.

In some embodiments, corresponding cores at all ports may be coupled together by using auxiliary interleaving components. For example, a core (for example, 21-1) used as the first subset of the plurality of first cores may be fanned out at the first port 11, and then may be coupled, by using a first auxiliary interleaving component, to a core (for example, 22-1) that is used as the first subset of the plurality of second cores and that is fanned out at the second port 12. Furthermore, a core (for example, 23-1) used as the first subset of the plurality of third cores may be fanned out at the third port 13, and then may be coupled, by using a second auxiliary interleaving component, to a core (for example, 24-1) that is used as the first subset of the plurality of fourth cores and that is fanned out at the fourth port 14. In addition, a core (for example, 21-2) used as the second subset of the plurality of first cores may be fanned out at the first port 11, and then may be coupled, by using a third auxiliary interleaving component, to a core (for example, 23-2) that is used as the second subset of the plurality of third cores and that is fanned out at the third port 13. Furthermore, a core (for example, 24-2) used as the second subset of the plurality of fourth cores may be fanned out at the fourth port 14, and then may be coupled, by using a fourth auxiliary interleaving component, to a core (for example, 22-2) that is used as the second subset of the plurality of second cores and that is fanned out at the second port 12. For example, the first auxiliary interleaving component, the second auxiliary interleaving component, the third auxiliary interleaving component, and the fourth auxiliary interleaving component may be selected from a group including a single-core fiber, a spatial waveguide chip, and a spatial optical path structure. Similarly, in these embodiments, the first auxiliary interleaving component, the second auxiliary interleaving component, the third auxiliary interleaving component, and the fourth auxiliary interleaving component are used to provide a candidate interleaving solution of cores at a plurality of ports, so that interleaving can be implemented under different spatial or ambient conditions.

For example, in an example of the spatial waveguide chip, the first port 11, the second port 12, the third port 13, and the fourth port 14 of the interleaver 10 may be respectively coupled to a first port, a second port, a third port, and a fourth port of the spatial waveguide chip, and then corresponding cores at the ports are interleaved by using a waveguide structure on the spatial waveguide chip, so that a core interleaving operation may be simplified.

For example, in an example of the spatial optical path structure, the spatial optical path structure may include a fiber collimator and a reflector. For example, a first fiber collimator, a second fiber collimator, a third fiber collimator, and a fourth fiber collimator may be respectively disposed at the first port 11, the second port 12, the third port 13, and the fourth port 14, and then light coupled out from a core collimator of a port is reflected to a fiber collimator of another corresponding port by using the reflector, so that the light enters a core at the another port, thereby implementing core interleaving. Using the spatial optical path structure to implement core interleaving can expand an application scenario of core interleaving and improve freedom of a core interleaving operation.

In some embodiments, core interleaving of ports may be alternatively implemented through any combination of directly coupling cores at ports, using the single-core fiber, using the spatial waveguide chip, and using the spatial optical path structure. It should be understood that in this way, freedom of core interleaving can be further improved.

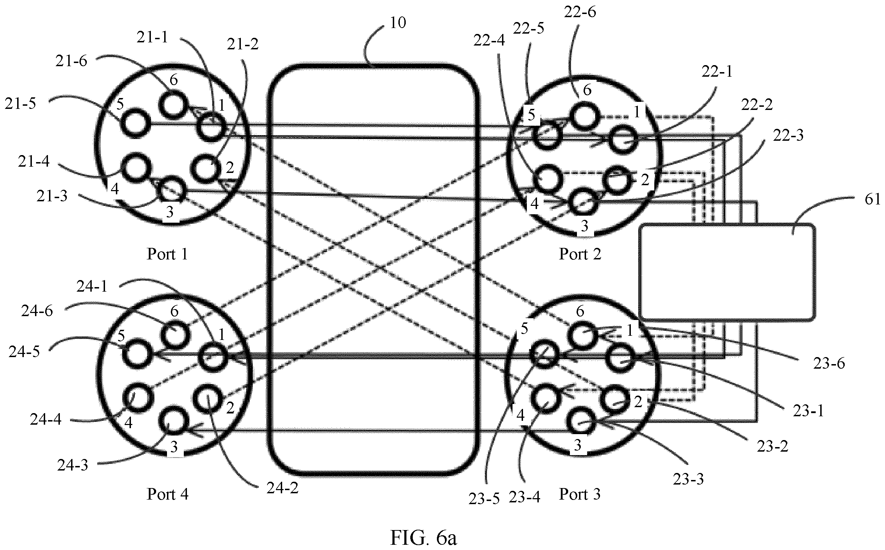

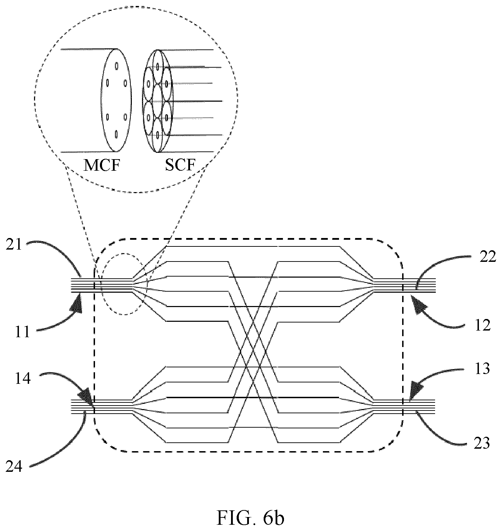

The foregoing describes in detail an interleaving principle and implementation of the multi-core fiber interleaver 10 by using the two-core fibers as an example. The following describes an interleaving principle and implementation of the multi-core fiber interleaver 10 by using six-core fibers as another example. FIG. 6a is a schematic diagram of interleaving of a multi-core fiber interleaver using six-core fibers as another example, and FIG. 6b is a schematic diagram illustrating, in a core fan-out manner, interleaving of the multi-core fiber interleaver shown in FIG. 6a.

As shown in FIG. 6a and FIG. 6b, in the example of the six-core fibers, the first multi-core fiber 21 coupled to the first port 11 includes six cores 21-1, 21-2, 21-3, 21-4, 21-5, and 21-6, the second multi-core fiber 22 coupled to the second port 12 includes six cores 22-1, 22-2, 22-3, 22-4, 22-5, and 22-6, the third multi-core fiber 23 coupled to the third port 13 includes six cores 23-1, 23-2, 23-3, 23-4, 23-5, and 23-6, and the fourth multi-core fiber 24 coupled to the fourth port 14 includes three cores 24-1, 24-2, 24-3, 24-4, 24-5, and 24-6.

In the example of the six-core fibers, interleaving of the six-core fibers may be implemented, for example, in the following manner: Three cores (for example, the cores 21-1, 21-3, and 21-5) in the six cores of the first multi-core fiber 21 are used as a first subset, and the first subset is coupled to a first subset (for example, the cores 22-1, 22-3, and 22-5) of the six cores of the second multi-core fiber 21. Three cores (for example, the cores 24-1, 24-3, and 24-5) in the six cores of the fourth multi-core fiber 24 are used as a first subset, and the first subset is coupled to a first subset (for example, the cores 23-1, 23-3, and 23-5) in the six cores of the third multi-core fiber 23. In addition, the other three cores (for example, the cores 21-2, 21-4, and 21-6) in the six cores of the first multi-core fiber 21 are used as a second subset, and the second subset is coupled to a second subset (for example, the cores 23-2, 23-4, and 23-6) of the third multi-core fiber 23. A second subset (for example, the cores 24-2, 24-4, and 24-6) of the six cores of the fourth multi-core fiber 24 is coupled to a second subset (for example, the cores 22-2, 22-4, and 22-6) of the second multi-core fiber 22.

When a six-core fiber interleaver is used as the multi-core fiber interleaver 10, the multi-core fiber amplifier 50 in FIG. 4 may be further disposed as follows: The first subset (for example, the cores 22-1, 22-3, and 22-5) of the second multi-core fiber 21 is connected to the first subset (for example, the cores 23-1, 23-3, and 23-5) of the third multi-core fiber 23 by using the gain medium 61 outside the multi-core fiber interleaver 10, and the second subset (for example, the cores 22-2, 22-4, and 22-6) of the second multi-core fiber 21 is connected to the second subset (for example, the cores 23-2, 23-4, and 23-6) of the third multi-core fiber 23 by using the gain medium 61 outside the multi-core fiber interleaver 10.

When the first port 21 is used as an input port, the fourth port 24 is used as an output port, and the cores 22-1, 22-3, and 22-5 of the first multi-core fiber are used as signal input cores, an optical signal flow may be transmitted along the following first optical transmission path: the cores 22-1, 22-3, and 22-5 located at the first port 11 -> the cores 22-1, 22-3, and 22-5 located at the second port 12 -> the gain medium 61 located outside the interleaver 50 -> the cores 23-1, 23-3, and 23-5 located at the third port 13 -> the cores 24-1, 23-4, and 23-6 located at the fourth port 14.

On the contrary, when the first port 21 is used as an output port, the fourth port 24 is used as an input port, and the cores 24-2, 24-4, and 24-6 of the fourth multi-core fiber are used as signal input cores, an optical signal flow may be transmitted along the following second optical transmission path: the cores 24-2, 24-4, and 24-6 located at the fourth port 14 -> the cores 22-2, 22-4, and 22-6 located at the second port 12 -> the gain medium 61 located outside the interleaver 50 -> the cores 23-2, 23-4, and 23-6 located at the third port 13 -> the cores 21-2, 21-4, and 21-6 located at the first port 11. It can be learned from the foregoing descriptions that the first optical transmission path and the second optical transmission path are opposite, and optical signals undergo gain amplification performed by using the gain medium. In addition, it should be further understood that optical signal transmission along the first optical transmission path and the second optical transmission path may be performed at the same time, because a first subset and a second subset limited to a same multi-core fiber do not intersect with each other, and therefore, different cores are used for the first optical transmission path and the second optical transmission path.

To implement interleaving between cores at different ports, similar to the foregoing two-core fibers, in some embodiments, a corresponding core may be directly fanned out at each port, and cores at different ports may be directly coupled (for example, welded) together. For example, the cores 21-1, 21-3, and 21-5 used as the first subset of the plurality of first cores may be fanned out at the first port 11, and may be directly coupled to the cores 22-1, 22-3, and 22-5 that are used as the first subset of the plurality of second cores and that are fanned out at the second port 12. Furthermore, the cores 23-1, 23-3, and 23-5 used as the first subset of the plurality of third cores may be fanned out at the third port 13, and may be directly coupled to the cores 24-1, 24-3, and 24-5 that are used as the first subset of the plurality of fourth cores and that are fanned out at the fourth port 14. In addition, the cores 21-2, 21-4, and 21-6 used as the second subset of the plurality of first cores may be fanned out at the first port 11, and may be directly coupled to the cores 23-2, 23-4, and 23-6 that are used as the second subset of the plurality of third cores and that are fanned out at the third port 13. Furthermore, the cores 24-2, 24-4, and 24-6 used as the second subset of the plurality of fourth cores may be fanned out at the fourth port 14, and may be directly coupled to the cores 22-2, 22-4, and 22-6 that are used as the second subset of the plurality of second cores and that are fanned out at the second port 12. This direct coupling manner makes interleaving relatively simple.

In some embodiments, corresponding cores at all ports may be coupled together by using auxiliary interleaving components. For example, the cores 21-1, 21-3, and 21-5 used as the first subset of the plurality of first cores may be fanned out at the first port 11, and then may be coupled, by using a first auxiliary interleaving component, to the cores 22-1, 22-3, and 22-5 that are used as the first subset of the plurality of second cores and that are fanned out at the second port 12. Furthermore, the cores 23-1, 23-3, and 23-5 used as the first subset of the plurality of third cores may be fanned out at the third port 13, and then may be coupled, by using a second auxiliary interleaving component, to the cores 24-1, 24-3, and 24-5 that are used as the first subset of the plurality of fourth cores and that are fanned out at the fourth port 14. In addition, the cores 21-2, 21-4, and 21-6 used as the second subset of the plurality of first cores may be fanned out at the first port 11, and then may be coupled, by using a third auxiliary interleaving component, to the cores 23-2, 23-4, and 23-6 that are used as the second subset of the plurality of third cores and that are fanned out at the third port 13. Furthermore, the cores 24-2, 24-4, and 24-6 used as the second subset of the plurality of fourth cores may be fanned out at the fourth port 14, and then may be coupled, by using a fourth auxiliary interleaving component, to the cores 22-2, 22-4, and 22-6 that are used as the second subset of the plurality of second cores and that are fanned out at the second port 12. Similarly, for example, the first auxiliary interleaving component, the second auxiliary interleaving component, the third auxiliary interleaving component, and the fourth auxiliary interleaving component may be selected from a group including a single-core fiber, a spatial waveguide chip, and a spatial optical path structure. The spatial waveguide chip and the spatial optical path structure may be connected in a coupling manner similar to that described above for the two-core fibers.

It should be understood that in these embodiments, the first auxiliary interleaving component, the second auxiliary interleaving component, the third auxiliary interleaving component, and the fourth auxiliary interleaving component are used to provide a candidate interleaving solution of cores at a plurality of ports, so that interleaving can be implemented under different spatial or ambient conditions.

In addition, similarly, in some embodiments, core interleaving of ports may be alternatively implemented through any combination of directly coupling cores at ports, using the single-core fiber, using the spatial waveguide chip, and using the spatial optical path structure. It should be understood that in this way, freedom of core interleaving can be further improved.

In the examples of the two-core fibers and the six-core fibers described above, a quantity (referred to as a first quantity, for example) of cores included in a first subset and a quantity (referred to as a second quantity, for example) of cores included in a second subset of a same multi-core fiber are the same, that is, the first subset and the second subset each include one core or three cores, and a sum of the quantities of cores included in the first subset and the second subset is equal to a total quantity of cores included in the same core, that is, 2 or 6. However, it should be understood that the two-core fibers, the six-core fibers, and selected quantities of cores included in the first subset and the second subset are merely examples, and do not constitute any limitation on the scope of the present disclosure. In another embodiment, the total quantity of cores included in the multi-core fiber and a quantity of cores included in each of the first subset and the second subset may be adjusted or changed based on an application requirement.

For example, in some embodiments, a sum of a quantity of cores in a first subset and a quantity of cores in a second subset of a same multi-core fiber may be less than or equal to a total quantity of cores included in the same multi-core fiber. In addition, in some embodiments, in a same multi-core fiber, a quantity (for example, a first quantity) of cores included in a first subset may be equal or unequal to (for example, greater than or less than) a quantity (for example, a second quantity) of cores in a second subset. For example, in the example of the six-core fibers, the quantity of cores included in the first subset may be 4, and the quantity of cores included in the second subset may be 2. For another example, in the example of the six-core fibers, the quantity of cores included in the first subset may be 3, the quantity of cores included in the second subset may be 2, and a sum of the quantities may be less than a total quantity 6 of cores. It should be understood that the quantities of cores in the first subset and the second subset are selected in the foregoing manner, so that freedom of fiber interleaving can be further improved, and optical communications capacity requirements in different directions can be met.

For another example, in some embodiments, a same multi-core fiber may further include a third subset in addition to a first subset and a second subset, and a core included in the third subset may be used as an auxiliary communications channel.

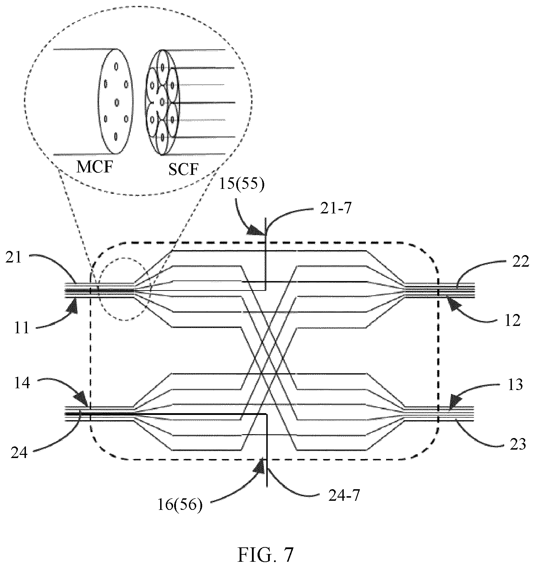

To more clearly show how interleaving is performed for the third subset, FIG. 7 is a schematic diagram illustrating, in a core fan-out manner, interleaving of a variant example of the multi-core fiber interleaver shown in FIG. 6b. As shown in FIG. 7, each of the first multi-core fiber 21 and the fourth multi-core fiber 24 respectively coupled to the first port 11 and the fourth port 14 includes seven cores, and each of the second multi-core fiber 22 and the third multi-core fiber 23 respectively coupled to the second port 12 and the third port 13 includes six cores.

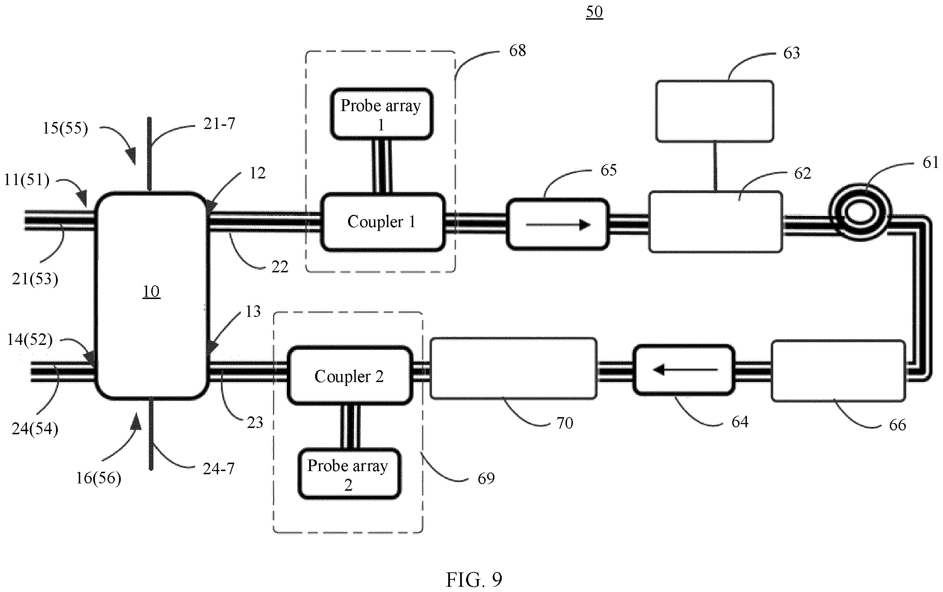

In this example embodiment, six cores of each of the first multi-core fiber 21, the second multi-core fiber 22, the third multi-core fiber 23, and the fourth multi-core fiber 24 may be interleaved in a manner the same as that shown in FIG. 6a and FIG. 6b, and details are not described herein again. In addition, the seventh core 21-7 of the first multi-core fiber 21 and the seventh core of the fourth multi-core fiber 24 may be respectively coupled out from a fifth port 15 and a sixth port 16 of the multi-core interleaver 10 as third subsets. The seventh core 21-7 of the first multi-core fiber 21 and the seventh core of the fourth multi-core fiber 24 may be coupled out directly or by using an auxiliary interleaving component. Further, the fifth port 15 and the sixth port 16 of the multi-core interleaver 10 may be used as a third port 53 and a fourth port 54 (refer to FIG. 9) of the optical fiber amplifier 50.

The third subsets or the fifth port 15 and the sixth port 16 may be used as auxiliary communications channels of multi-core fibers. For example, a core in the third subset may be used to transmit an auxiliary control signal, to control an upstream/a downstream network element such as an upstream/a downstream receiver (for example, optical transponder unit). The third subsets or the fifth port 15 and the sixth port 16 may be alternatively used as detection channels for multi-core fiber faults. For example, a core in the third subset may be used as a sounding channel of an OTDR for detecting an optical signal, to detect a fault point of a multi-core fiber.

Although the foregoing describes the function of the core in the third subset by using the seven-core fibers as an example, it should be understood that the seven-core fibers are merely an example, and the third subset may also be applied to a multi-core fiber (for example, a three-core fiber or a six-core fiber) including another quantity of cores. In addition, not only the first multi-core fiber 21 and the fourth multi-core fiber 24 may include cores in the third subsets, but also the second multi-core fiber 22 and the third multi-core fiber 23 may include cores in third subsets used as auxiliary communications channels for control signals or fault detection. In addition, the third subset may include more than one core, and a quantity of cores in the third subset may be selected based on an actual requirement.

The foregoing describes the interleaving principle of the multi-core fiber interleaver by using two-core, six-core, and seven-core fibers as examples. It should be understood that the foregoing examples of the quantity of cores do not constitute any limitation on application of the multi-core fiber interleaver in the present disclosure. The multi-core fiber interleaver in the present disclosure may be applied to any multi-core fiber with at least two cores, and total quantities of cores included in the first multi-core fiber, the second multi-core fiber, the third multi-core fiber, and the fourth multi-core fiber may be different, provided that the first subsets include a same quantity (that is, the first quantity) of cores, and the second subsets include a same quantity (that is, the second quantity) of cores.

In some embodiments, a first subset and a second subset limited to a same multi-core fiber do not intersect with each other. Therefore, different cores are used by the multi-core fiber sensor to perform bidirectional transmission, so that a design of a communications circuit is simplified. However, this is not mandatory. In some other embodiments, it is possible that a first subset and a second subset limited to a same multi-core fiber intersect with each other. This means that a core in the intersection is used as both a core for an uplink and a core for a downlink. Although this intersection design makes the design of the communications circuit complex, the design may be applied to some special scenarios in which a quantity of cores is limited.

To reduce optical signal crosstalk between a plurality of cores for the uplink or the downlink, in some embodiments, cores in a first subset or cores in a second subset of a same multi-core fiber are not adjacent to each other. This may increase a distance between the cores in the first subset or the second subset, so that crosstalk of optical signals in a same direction is reduced.

In other embodiments, cores in a first subset and cores in a second subset of a same multi-core fiber are located at alternate positions. In this way, selection of the first subset and the second subset can be simple, and a distance between cores in a first subset or a second subset of a same multi-core fiber can also be ensured, so that crosstalk of optical signals in a same direction is reduced.

Referring back to FIG. 3, as described above, the gain medium 61 is disposed between the second port 12 and the third port 13 to amplify an optical signal passing through the gain medium 61, so that optical output that is of the multi-core fiber amplifier and that is obtained through gain amplification is achieved. In some embodiments, the gain medium may be, for example, rare-earth element ions such as Er, Nd, or Yb. The gain medium is used to perform gain amplification on an optical signal output from the second port 22. In some embodiments, the gain medium 61 may be implemented as a doped multi-core fiber. Rare-earth element ions such as erbium ions may be doped into a multi-core fiber to implement the doped multi-core fiber. A structure and a function of the doped multi-core fiber are well-known in the art, and details are not described herein.

To better implement gain amplification of the gain medium 61, similar to the conventional first-type multi-core fiber amplifier and the conventional second-type multi-core fiber amplifier, in some embodiments, a pump/signal wavelength division multiplexer 62 may be provided between the gain medium 61 and the second port 22, and the pump/signal wavelength division multiplexer 62 may couple pump light to signal light output by using the second port 22, and then provide the coupled pump light and signal light to the gain medium 61 implemented as a doped multi-core fiber, for example. The gain medium 61 may amplify the input signal light by absorbing the pump light. In some embodiments, the pump light may be provided by a pump laser 63 to the pump/signal wavelength division multiplexer 62 by using a single-core fiber. In this way, the pump light can be provided in a simple manner.

In some embodiments, a first optical isolator 64 may be provided, and the first optical isolator 64 may be disposed between the gain medium 61 and the third port 13, so that an optical signal unidirectionally passes through a component. This prevents reflected light from entering the gain medium (for example, an erbium-doped fiber) to affect key performance indicators such as a gain and a noise figure of the amplifier.

It should be understood that the example embodiment of the multi-core fiber amplifier shown in FIG. 4 actually provides a design of a multi-core fiber amplifier with a simplest function. Therefore, a person skilled in the art may make some modifications and variations to the example embodiment of FIG. 4 without departing from the spirit and scope of the present invention.

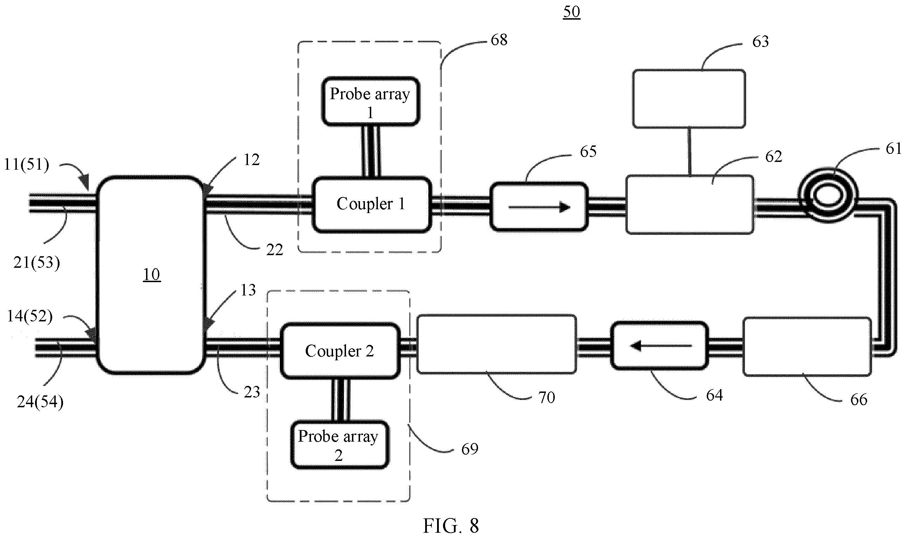

FIG. 8 is a schematic diagram of a first variation of an example embodiment of the multi-core fiber amplifier shown in FIG. 4. As shown in FIG. 8, compared with the example embodiment of FIG. 4, in this variant embodiment, the multi-core fiber amplifier 50 may include another optical functional unit in addition to the multi-core fiber interleaver 10, the first pump/signal wavelength division multiplexer 62, the pump laser 63, and the first optical isolator 64.

In some embodiments, the optical functional unit may include a second optical isolator 65. The second optical isolator 65 may be disposed between the gain medium 61 and the second port 12, and in particular, may be disposed between the pump/signal wavelength division multiplexer 61 and the second port 12, so that an optical signal unidirectionally passes through a component. This prevents reverse ASE noise light generated by the gain medium 61 (or an erbium-doped multi-core fiber) from being leaked from an input end.

In some embodiments, the optical functional unit may include a first probe/coupler 68 and/or a second probe/coupler 69. The first probe/coupler 68 and the second probe/coupler 69 are used to couple a small portion of optical power of each core of a multi-core fiber for probe array detection. In particular, the first probe/coupler 68 may be disposed between the second port 12 and the gain medium 61 to detect strength of the optical signal output from the second port 12, and the second probe/coupler 69 may be disposed between the gain medium 61 and the third port 13 to detect strength of the optical signal obtained through gain amplification.

In further embodiments, the first probe/coupler 68 may include a coupler 1 and a probe array 1. The coupler 1 is connected to the second multi-core fiber 22 coupled to the second port 12, and the probe array 1 detects, by using the multi-core fiber, signal light coupled out from the coupler 1. The second probe/coupler 69 may include a coupler 2 and a probe array 2. The coupler 2 is connected to the third multi-core fiber 23 coupled to the third port 13, and the probe array 2 detects, by using the multi-core fiber, signal light that is coupled out from the coupler 2 and that is obtained through gain amplification. An unamplified signal is coupled out from the coupler 1, and usually has relatively low power. Therefore, the coupler 1 usually uses a slightly large coupling proportion such as 5%. An amplified signal is coupled out from the coupler 2, and usually has relatively high power. Therefore, the coupler 2 usually uses a relatively small coupling proportion such as 1%.

In some embodiments, the optical functional unit may further include a gain flattening filter 70. The gain flattening filter 70 is coupled between the third port 13 and the gain medium 61, and in particular, may be coupled between the first optical isolator 64 and the third port 13 to equalize wavelength related gains of the gain medium of the amplifier for signals to be basically consistent.

In some embodiments, the optical functional unit may further include a second pump/signal wavelength division multiplexer 66. The second pump/signal wavelength division multiplexer 66 may be disposed between the third port 13 and the gain medium 61, and in particular, may be disposed between the gain flattening filter 70 and/or the second probe/coupler 69 and the gain medium 61 to output, through coupling, residual pump light obtained after absorption of the gain medium (for example, an erbium-doped fiber). It should be noted that although the first pump/signal wavelength division multiplexer 62 and the second pump/signal wavelength division multiplexer 66 may be used herein, the two have different functions. The first pump/signal wavelength division multiplexer 62 forms a forward pump structure to provide sufficient pump power on an input side of the gain medium (for example, an erbium-doped fiber), to achieve a high inversion and a relatively low noise figure. The second pump/signal wavelength division multiplexer 66 is only used to couple out residual pump light. However, the foregoing disposition is not mandatory. In another embodiment, when a requirement of the system for the noise figure of the optical amplifier is low, a pump laser may be connected to the second pump/signal wavelength division multiplexer 66 on an output side of the gain medium (for example, an erbium-doped fiber), to form a reverse pump structure. The reverse pump structure has advantages of relatively high pump power conversion efficiency and reducing pump power consumption. In addition, in other embodiments, a group of pump lasers may be added to form a two-way pump structure to balance the noise figure and power conversion efficiency, but costs may increase.

In other embodiments, to reduce crosstalk between cores of the multi-core fiber amplifier, a fiber and the gain medium (for example, a doped fiber) used in the multi-core fiber amplifier can use a waveguide design to reduce crosstalk between adjacent cores. For example, a special refractive index distribution design or a core pitch design is used to reduce crosstalk impact.

FIG. 9 is a schematic diagram of a second variation of an example embodiment of the multi-core fiber amplifier shown in FIG. 4. Compared with the example embodiment of the first variation shown in FIG. 6, the multi-core fiber amplifier shown in FIG. 9 uses the multi-core fiber interleaver shown in FIG. 7. The multi-core fiber interleaver has six ports, namely, the first port 11, the second port 12, the third port 13, the fourth port 14, the fifth port 15, and a sixth port 17. The first port 11 may be used as the first input/output port 51 of the optical fiber amplifier 50, the second port 12 may be used as the second input/output port 52 of the optical fiber amplifier 50, the fifth port 15 may be used as a first auxiliary communications port 55 of the optical fiber amplifier 50, and the sixth port 16 may be used as a second auxiliary communications port 56 of the optical fiber amplifier 50. The first auxiliary communications port 55 and the second auxiliary communications port 56 may be configured to provide auxiliary communications channels to detect a fiber fault point by using the OTDR and/or provide an optical signal for controlling an upstream/a downstream network element.

The following briefly describes a signal flow of the multi-core fiber amplifier 50 in the present disclosure. It should be understood that each of the first input/output port 51 and the second input/output port 52 may be used as a signal input port or a signal output port. Therefore, the multi-core fiber amplifier in the present disclosure can implement bidirectional transmission of optical signals.

Specifically, when the first subset of the first multi-core fiber 21 coupled to the first input/output port 51 receives an input optical signal, because of interleaving of the multi-core fiber interleaver 10, the optical signal is amplified by the gain medium 61 of the multi-core fiber amplifier 60, and then coupled out from the first subset of the fourth multi-core fiber 24 coupled to the second input/output port 52, thereby implementing optical transmission of the optical signal from the first input/output port 51 to the second input/output port 52. When the second subset of the fourth multi-core fiber 24 coupled to the second input/output port 52 receives an input optical signal, because of interleaving of the multi-core fiber interleaver 10, the optical signal is amplified by the gain medium 61 of the multi-core fiber amplifier 60, and then coupled out from the second subset of the first multi-core fiber 21 coupled to the first input/output port 51, thereby implementing optical transmission of the optical signal from the second input/output port 52 to the first input/output port 51.

When the multi-core fiber amplifier shown in FIG. 9 has the first auxiliary communications port 55 and the second auxiliary communications port 56, the first auxiliary communications port 55 may be configured to receive an optical signal from the third subset of the first multi-core fiber 21 coupled to the first input/output port 51, and the second auxiliary communications port 56 may be configured to receive an optical signal from the third subset of the fourth multi-core fiber 24 coupled to the second input/output port 52. The optical signals received by the first auxiliary communications port 55 and the second auxiliary communications port 56 may be used to detect light intensity and/or used as optical signals for controlling an upstream/a downstream network element.

The example embodiments and variations of the multi-core fiber amplifier in the present disclosure have been described in detail above. It should be understood that the multi-core fiber amplifier in the present disclosure has the following advantages over the conventional first-type optical fiber amplifier and second-type optical fiber amplifier:
- Compared with the first-type optical fiber amplifier, each core does not need to be provided with a separate pump laser and pump/signal wavelength division multiplexer, so that integration is improved and costs are reduced.
- Compared with the first-type optical fiber amplifier and the second-type optical fiber amplifier, a single-fiber unidirectional amplifier is improved to a single-fiber bidirectional amplifier. No other component than the core interleaver is added, but the following advantages of single-fiber bidirectional transmission are taken:
   a. Complexity of an optical transponder unit (OTU) is alleviated. In multi-core unidirectional transmission, a MIMO technology usually needs to be used for reception to avoid crosstalk. However, a bidirectional transmission technology of non-adjacent (or alternate) cores in the present disclosure greatly reduces inter-core crosstalk, and a technical complexity requirement of an OTU is reduced, so that overall single-bit transmission costs are reduced.
   b. Integration of network deployment is improved. One amplifier supports bidirectional signal amplification, and lines and optical amplifiers are reduced by half.
   c. c. Single-fiber bidirectional transmission is performed. Technically, bidirectional signals can keep relatively consistent latencies, and complexity of a clock synchronization function can be reduced, or clock synchronization precision can be improved.
- In the embodiments with the first auxiliary communications port 55 and the second auxiliary communications port 56, the two auxiliary communications ports may be used as auxiliary channels coupled between upstream and downstream sites, and the auxiliary channels may be used, for example, as a DCN communications channel of a network element of each site in a transmission device management network. Therefore, the multi-core fiber amplifier in the present disclosure has wider application scenarios. For example, the auxiliary communications channel may be used to manage an optical amplifier site of a terrestrial cable system.

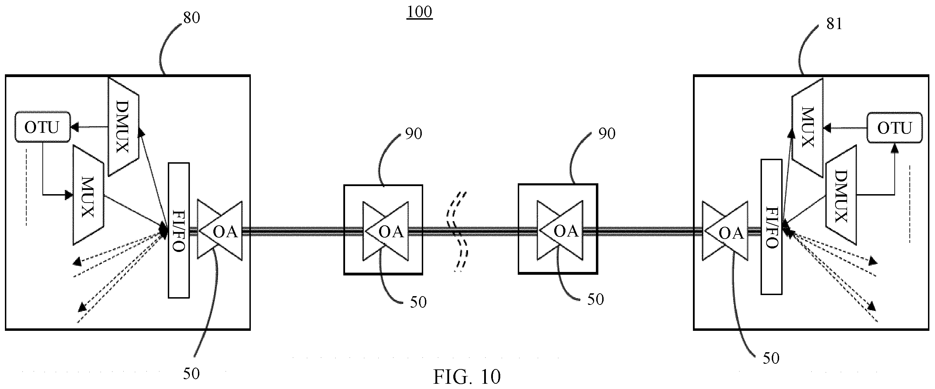

The following describes example application of the multi-core fiber amplifier in the present disclosure to a fiber communications system 100 with reference to FIG. 10.

As shown in FIG. 10, at least one optical amplifier site 90 may be disposed between a first optical terminal site 80 and a second optical terminal site 81, and the optical amplifier site 90 may include the multi-core fiber amplifier 50 in the present disclosure. For example, the first optical terminal site 80 or the second optical terminal site 81 may include at least one of an optical transponder unit and a multiplexer or a demultiplexer. It should be understood that the example of the first optical terminal site 80 or the second optical terminal site 81 herein does not constitute a limitation. In another embodiment, the first optical terminal site 80 or the second optical terminal site 81 may alternatively include another optical communications unit, for example, may include the optical fiber amplifier 50 in the present disclosure.

As described above, the multi-core fiber amplifier 50 in the present disclosure is adapted for bidirectional transmission, and therefore the optical amplifier site 90 is also adapted for bidirectional transmission. Because of this bidirectional transmission characteristic, the optical amplifier site 90 in the present disclosure can be disposed in series between the first optical terminal site 80 and the second optical terminal site 81 by using a single fiber.

It should be noted that "by using a single fiber" in this specification means a plane that infinitely extends in a longitudinal direction and that is perpendicular to a transmission direction has only one single fiber.

In some embodiments, the at least one optical amplifier site 90 may include a plurality of optical amplifier sites 90. The plurality of optical amplifier sites 90 may also be connected in series by using a single fiber, and then may be coupled between the first optical terminal site 80 and the second optical terminal site 81.

It should be understood that compared with the conventional fiber communications system 40' shown in FIG. 3 that uses two fibers for an uplink and a downlink, the fiber communications system 100 in the present disclosure can implement a bidirectional transmission system through deployment by using only a single fiber. In addition, only a single multi-core fiber amplifier may be disposed for each optical amplifier site 90 in the present disclosure. Therefore, when a transmission capacity is small, the fiber communications system in the present disclosure reduces engineering deployment costs (for example, a quantity of installed devices and a quantity of leased fibers) and operation costs (for example, power consumption).

In addition, because bidirectionally transmitted signals are transmitted by using a single fiber in the fiber communications system in the present disclosure, it is ensured that latencies of an uplink and a downlink are consistent, so that a problem of inconsistent bidirectional latencies in the conventional technology is cleverly resolved.

In addition, in the embodiments in which the plurality of cores in the first subset or the second subset are not adjacent (for example, the cores in the first subset and the cores in the second subset are alternately inserted), because a distance between co-directional transmission cores increases, crosstalk between the cores can be effectively reduced. Because a coupling coefficient may be quite low when transmission in opposite directions is performed on alternate cores, the multi-core fiber used as a transmission fiber in the present disclosure may be approximately considered as a coupling-free fiber, so that a receiver may not need to use a MIMO receiving technology. Therefore, complexity of the receiver is greatly reduced, and crosstalk costs can be ignored.

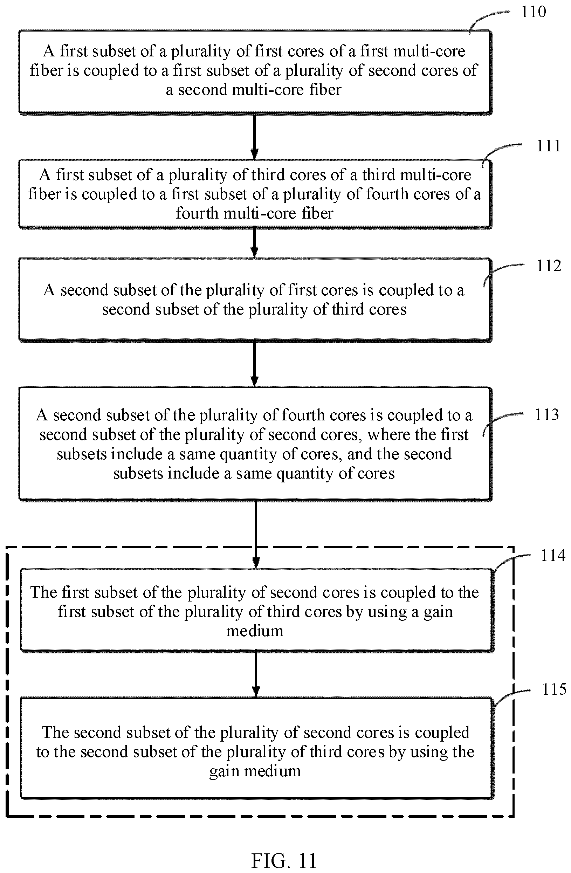

The following briefly describes a multi-core fiber interleaving method, an optical amplification method for a multi-core fiber, and a single-fiber bidirectional transmission method in the present disclosure by using method procedures as an example with reference to FIG. 11 to FIG. 13.

It should be understood that the foregoing embodiments of the multi-core fiber interleaver, the multi-core fiber amplifier, and the single-fiber bidirectional transmission system may be applied to the following multi-core fiber interleaving method, optical amplification method for a multi-core fiber, or single-fiber bidirectional transmission method without conflicting with each other.

FIG. 11 is a schematic flowchart of a multi-core fiber interleaving method according to an example embodiment of the present disclosure.

As shown in FIG. 11, in a block 110, a first subset (for example, cores 21-1, 21-3, and 21-5) of a plurality of first cores of a first multi-core fiber 21 is coupled to a first subset (for example, cores 22-1, 22-3, and 22-5) of a plurality of second cores of a second multi-core fiber 22.

In a block 111, a first subset (for example, cores 23-1, 23-3, and 23-5) of a plurality of third cores of a third multi-core fiber 23 is coupled to a first subset (for example, cores 24-1, 24-3, and 24-5) of a plurality of fourth cores of a fourth multi-core fiber 24.

In a block 112, a second subset (for example, cores 21-2, 21-4, and 21-6) of the plurality of first cores is coupled to a second subset (for example, cores 23-2, 23-4, and 23-6) of the plurality of third cores.

In a block 113, a second subset (for example, cores 24-2, 24-4, and 24-6) of the plurality of fourth cores is coupled to a second subset (for example, cores 22-2, 22-4, and 22-6) of the plurality of second cores. The first subsets of the multi-core fibers include a same quantity of cores, and the second subsets of the multi-core fibers include a same quantity of cores.

According to the interleaving method described above, interleaving can be implemented between the first multi-core fiber 21, the second multi-core fiber 22, the third multi-core fiber 23, and the fourth multi-core fiber 24.

In some additional embodiments, the foregoing interleaving method may also be associated with a gain medium. For example, in a block 114, the first subset (for example, the cores 22-1, 22-3, and 22-5) of the plurality of second cores is coupled to the first subset (for example, the cores 23-1, 23-3, and 23-5) of the plurality of third cores by using a gain medium 61. In a block 115, the second subset (for example, the cores 22-2, 22-4, and 22-6) of the plurality of second cores is coupled to the second subset (for example, the cores 23-2, 23-4, and 23-6) of the plurality of third cores by using the gain medium 61.

By performing the interleaving operations in the block 114 and the block 115, the cores in both the first subset and the second subset can be further associated with the gain medium, so that gain amplification of an input optical signal can be implemented.

The foregoing briefly describes the multi-core interleaving fiber interleaving method in the present disclosure. It should be understood that in some embodiments, the multi-core fiber interleaving method may be directly used to produce/assemble the foregoing multi-core fiber interleaver, and therefore implement production of a fiber interleaver used as a component or a product. In other embodiments, the multi-core fiber interleaving method may be directly used to produce/assemble a multi-core fiber amplifier, and therefore implement a multi-core fiber amplifier used as a product, and an operation of packaging the fiber interleaver can be omitted. In addition, it should be further understood that the multi-core fiber interleaving method in the present disclosure may be automatically completed by a machine, or may be manually completed, for example, completed by a worker of a factory that produces the multi-core interleaver.

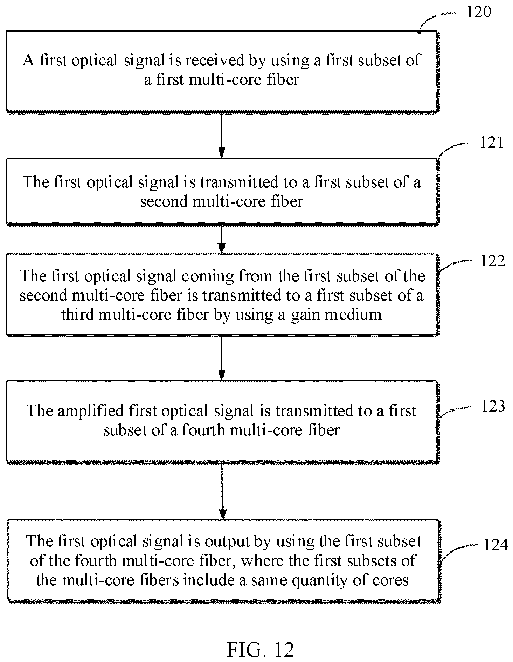

FIG. 12 is a schematic flowchart of an optical amplification method applicable to a multi-core fiber according to an example embodiment of the present disclosure.

As shown in FIG. 12, in a block 120, a first optical signal is received by using a first subset (for example, cores 21-1, 21-3, and 21-5) of a first multi-core fiber 21.

In a block 121, the first optical signal is transmitted to a first subset (for example, cores 22-1, 22-3, and 22-5) of a second multi-core fiber 22.

In a block 122, the first optical signal coming from the first subset (for example, the cores 22-1, 22-3, and 22-5) of the second multi-core fiber 22 is transmitted to a first subset (for example, cores 23-1, 23-3, and 23-5) of a third multi-core fiber 23 by using a gain medium 61.

In a block 123, the amplified first optical signal is transmitted to a first subset (for example, cores 24-1, 24-3, and 24-5) of a fourth multi-core fiber 24.

In a block 124, the first optical signal is output by using the first subset (for example, the cores 24-1, 24-3, and 24-5) of the fourth multi-core fiber 24. The first subsets of the multi-core fibers include a same quantity of cores.

Additionally, in a further embodiment of the present disclosure, the foregoing optical amplification method may further include the following operations:
receiving a second optical signal by using a second subset (for example, cores 24-2, 24-4, and 24-6) of the fourth multi-core fiber 24, where a transmission direction of the second optical signal is opposite to a transmission direction of the first optical signal, and then transmitting the second optical signal to a second subset (for example, cores 22-2, 22-4, and 22-6) of the second multi-core fiber (22);
transmitting the second optical signal coming from the second subset (for example, the cores 22-2, 22-4, and 22-6) of the second multi-core fiber (22) to a second subset (for example, cores 23-2, 23-4, and 23-6) of the third multi-core fiber 23 by using the gain medium 61;
transmitting the amplified second optical signal to a second subset (for example, cores 21-2, 21-4, and 21-6) of the first multi-core fiber 21; and
outputting the second optical signal by using the second subset (for example, the cores 21-2, 21-4, and 21-6) of the first multi-core fiber 21, where the second subsets of the multi-core fibers include a same quantity of cores.

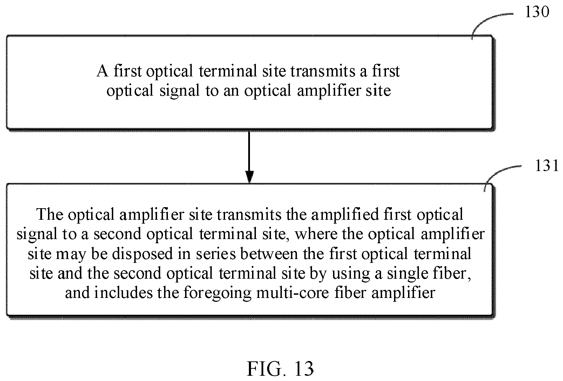

FIG. 13 is a schematic flowchart of a single-fiber bidirectional transmission method applicable to a multi-core fiber according to an example embodiment of the present disclosure.

In a block 130, a first optical terminal site 80 transmits a first optical signal to an optical amplifier site 90.

In a block 131, the optical amplifier site 90 transmits the amplified first optical signal to a second optical terminal site 81. The optical amplifier site 90 may be disposed in series between the first optical terminal site 80 and the second optical terminal site 81 by using a single fiber, and includes the foregoing multi-core fiber amplifier 50.

In a further embodiment, the single-fiber bidirectional transmission method may further include the following operations:
transmitting, by the second optical terminal site 81, a second optical signal to the optical amplifier site 90; and transmitting, by the optical amplifier site 90, the amplified second optical signal to the second optical terminal site 80.

Although the present invention has been described in detail in the accompanying drawings and the foregoing descriptions, such descriptions shall be considered illustrative or considered examples and not limiting. The present invention is not limited to the disclosed embodiments. When practicing the claimed invention, a person skilled in the art can understand and practice other variations of the disclosed embodiments by studying the accompanying drawings, the disclosure, and the appended claims.

In the claims, the term "comprise" does not rule out other elements, and the indefinite article "one" or "a" does not rule out "a plurality of". A single element or other unit may implement functions of a plurality of items set forth in the claims. The fact that some features are described only in different embodiments or dependent claims does not mean that combinations of these features cannot be used advantageously. Without departing from the spirit and scope of this application, the protection scope of this application covers any possible combination of features described in the embodiments or dependent claims.

Any reference numeral in the claims should not be construed as limiting the scope of the present invention.

## Claims

1. A multi-core fiber interleaver (10), comprising:
a first port (11), a second port (12), a third port (13), and a fourth port (14), respectively adapted to be coupled to a first multi-core fiber (21), a second multi-core fiber (22), a third multi-core fiber (23), and a fourth multi-core fiber (24) outside the multi-core fiber interleaver (10), wherein
a first subset (21-1, 21-3, 21-5) of a plurality of first cores of the first multi-core fiber (21) at the first port (11) is coupled to a first subset (22-1, 22-3, 22-5) of a plurality of second cores of the second multi-core fiber (22) at the second port (12);
a first subset (23-1, 23-3, 23-5) of a plurality of third cores of the third multi-core fiber (23) at the third port (13) is coupled to a first subset (24-1, 24-3, 24-5) of a plurality of fourth cores of the fourth multi-core fiber (24) at the fourth port (14);
a second subset (24-2, 24-4, 24-6) of the plurality of fourth cores of the fourth multi-core fiber (24) at the fourth port (14) is coupled to a second subset (22-2, 22-4, 22-6) of the plurality of second cores of the second multi-core fiber (22) at the second port (12);
a second subset (23-2, 23-4, 23-6) of the plurality of third cores of the third multi-core fiber (23) at the third port (13) is coupled to a second subset (21-2, 21-4, 21-6) of the plurality of first cores of the first multi-core fiber (21) at the first port (11); and
the first subsets of the multi-core fibers comprise a same quantity of cores, and the second subsets of the multi-core fibers comprise a same quantity of cores.

2. The multi-core fiber interleaver (10) according to claim 1, wherein the quantity of cores comprised in the first subsets of the multi-core fibers is equal to the quantity of cores comprised in the second subsets of the multi-core fibers.

3. The multi-core fiber interleaver (10) according to claim 1 or 2, wherein cores in a first subset and cores in a second subset of a same multi-core fiber are located at alternate positions.

4. The multi-core fiber interleaver (10) according to claim 1 or 2, wherein cores in a first subset of a same multi-core fiber are not adjacent to each other, and cores in a second subset of the same multi-core fiber are not adjacent to each other.

5. The multi-core fiber interleaver (10) according to any one of claims 1 to 4, wherein a sum of a quantity of cores in the first subset and a quantity of cores in the second subset of the same multi-core fiber is less than or equal to a total quantity of cores comprised in the same multi-core fiber.

6. The multi-core fiber interleaver (10) according to any one of claims 1 to 5, wherein
the first subset (21-1, 21-3, 21-5) of the plurality of first cores is fanned out at the first port (11), and is coupled, directly or by using a first auxiliary interleaving component, to the first subset (22-1, 22-3, 22-5) of the plurality of second cores that is fanned out at the second port (12);
the first subset (23-1, 23-3, 23-5) of the plurality of third cores is fanned out at the third port (13), and is coupled, directly or by using a second auxiliary interleaving component, to the first subset (24-1, 24-3, 24-5) of the plurality of fourth cores that is fanned out at the fourth port (14);
the second subset (21-2, 21-4, 21-6) of the plurality of first cores is fanned out at the first port (11), and is coupled, directly or by using a third auxiliary interleaving component, to the second subset (23-2, 23-4, 23-6) of the plurality of third cores that is fanned out at the third port (13); and
the second subset (24-2, 24-4, 24-6) of the plurality of fourth cores is fanned out at the fourth port (14), and is coupled, directly or by using a fourth auxiliary interleaving component, to the second subset (22-2, 22-4, 22-6) of the plurality of second cores that is fanned out at the second port (12).

7. The multi-core fiber interleaver (10) according to claim 6, wherein the first auxiliary interleaving component, the second auxiliary interleaving component, the third auxiliary interleaving component, and the fourth auxiliary interleaving component are selected from a group comprising a single-core fiber, a spatial waveguide chip, and a spatial optical path structure.

8. The multi-core fiber interleaver (10) according to any one of claims 1 to 7, wherein the first multi-core fiber (21) and the fourth multi-core fiber (24) comprise a same quantity of cores, and the second multi-core fiber (22) and the third multi-core fiber (23) comprise a same quantity of cores.

9. The multi-core fiber interleaver (10) according to any one of claims 1 to 8, wherein the first multi-core fiber (21), the second multi-core fiber (22), the third multi-core fiber (23), and the fourth multi-core fiber (24) comprise a same quantity of cores, and the quantity of cores ranges from 2 to 30.

10. The multi-core fiber interleaver (10) according to any one of claims 1 to 9, further comprising at least one of the following:
a fifth port (15), wherein a third subset (21-7) of the plurality of first cores of the first multi-core fiber (21) is adapted to be coupled out from the multi-core interleaver by using the fifth port (15); and
a sixth port (16), wherein a third subset (24-7) of the plurality of fourth cores of the fourth multi-core fiber (24) is adapted to be coupled out from the multi-core fiber interleaver (10) by using the sixth port (16).

11. A multi-core fiber amplifier (50), comprising:
the multi-core fiber interleaver (10) according to any one of claims 1 to 10, and
a gain medium (61), coupled between the second port (12) and the third port (13), wherein
the first port (11) and the fourth port (14) are adapted to be respectively used as a first input/output port (51) and a second input/output port (52) of the multi-core fiber amplifier (50); and
an optical signal is adapted for bidirectional transmission between the first input/output port (51) and the second input/output port (52) of the multi-core fiber amplifier (50), and is adapted for gain amplification performed by the gain medium (61).

12. The multi-core fiber amplifier (50) according to claim 11, wherein the gain medium (61) comprises a doped multi-core fiber.

13. The multi-core fiber amplifier (50) according to claim 11 or 12, further comprising a first pump/signal wavelength division multiplexer (62), coupled between the second port (12) and the gain medium (61), and configured to receive pump light from a first pump laser (63).

14. The multi-core fiber amplifier (50) according to claim 13, further comprising a second pump/signal wavelength division multiplexer (66), coupled between the gain medium (61) and the third port (13), and configured to couple out residual pump light coming from the first pump laser (63).

15. The multi-core fiber amplifier (50) according to claim 11 or 12, further comprising a first optical isolator (64), coupled between the third port (13) and the gain medium (61), and configured to unidirectionally isolate light reflected from the third port (13) to the gain medium (61).

16. The multi-core fiber amplifier (50) according to claim 15, further comprising a second optical isolator (65), coupled between the second port (12) and the gain medium (61), and configured to unidirectionally isolate light reversely transmitted from the gain medium (61) to the second port (12).

17. The multi-core fiber amplifier (50) according to claim 11 or 12, further comprising a first probe/coupler (68) and/or a second probe/coupler (69), wherein
the first probe/coupler (68) is coupled between the second port (12) and the gain medium (61) to detect light output from the second port (12), and
the second probe/coupler (69) is coupled between the third port (13) and the gain medium (61) to detect light coupled in to the third port (13).

18. The multi-core fiber amplifier (50) according to claim 11 or 12, further comprising a gain flattening filter (70), coupled between the gain medium (61) and the third port (13).

19. The multi-core fiber amplifier (50) according to claim 11 or 12, wherein the multi-core fiber interleaver (10) comprises a fifth port (15) adapted to couple out the third subset (21-7) of the plurality of first cores and a sixth port (16) adapted to couple out the third subset (24-7) of the plurality of fourth cores, and the fifth port (15) and the sixth port (16) are adapted to be used as a first auxiliary communications port and a second auxiliary communications port of the multi-core fiber amplifier (50).

20. A single-fiber bidirectional transmission system (100), comprising:
at least one optical amplifier site (90), wherein each optical amplifier site comprises the multi-core fiber amplifier (50) according to any one of claims 12 to 20; and
a first optical terminal site (80) and a second optical terminal site (81), wherein the optical amplifier site (90) is disposed in series between the first optical terminal site (80) and the second optical terminal site (81) by using a single fiber, and
an optical signal is adapted for bidirectional transmission between the first optical terminal site (80) and the second optical terminal site (81) by using the at least one optical amplifier site (90).

21. The single-fiber bidirectional transmission system (100) according to claim 20, wherein
the first optical terminal site (80) and the second optical terminal site (81) each comprise at least one of a multiplexer, a demultiplexer, and an optical transponder unit.

22. The single-fiber bidirectional transmission system (100) according to claim 20 or 21, wherein the at least one optical amplifier site comprises a plurality of optical amplifier sites (90), and the plurality of optical amplifier sites are connected in series by using a single fiber.

23. A multi-core fiber interleaving method, comprising:
coupling a first subset (21-1, 21-3, 21-5) of a plurality of first cores of a first multi-core fiber (21) to a first subset (22-1, 22-3, 22-5) of a plurality of second cores of a second multi-core fiber (22);
coupling a first subset (23-1, 23-3, 23-5) of a plurality of third cores of a third multi-core fiber (23) to a first subset (24-1, 24-3, 24-5) of a plurality of fourth cores of a fourth multi-core fiber (24);
coupling a second subset (21-2, 21-4, 21-6) of the plurality of first cores to a second subset (23-2, 23-4, 23-6) of the plurality of third cores; and
coupling a second subset (24-2, 24-4, 24-6) of the plurality of fourth cores to a second subset (22-2, 22-4, 22-6) of the plurality of second cores, wherein
the first subsets of the multi-core fibers comprise a same quantity of cores, and the second subsets of the multi-core fibers comprise a same quantity of cores.

24. The method according to claim 23, further comprising:
coupling the first subset (22-1, 22-3, 22-5) of the plurality of second cores to the first subset (23-1, 23-3, 23-5) of the plurality of third cores by using a gain medium (61), and
coupling the second subset (22-2, 22-4, 22-6) of the plurality of second cores to the second subset (23-2, 23-4, 23-6) of the plurality of third cores by using the gain medium (61).

25. An optical amplification method applicable to a multi-core fiber, comprising:
receiving a first optical signal by using a first subset (21-1, 21-3, 21-5) of a first multi-core fiber (21);
transmitting the first optical signal to a first subset (22-1, 22-3, 22-5) of a second multi-core fiber (22);
transmitting the first optical signal coming from the first subset (22-1, 22-3, 22-5) of the second multi-core fiber (22) to a first subset (23-1, 23-3, 23-5) of a third multi-core fiber (23) by using a gain medium (61);
transmitting the amplified first optical signal to a first subset (24-1, 24-3, 24-5) of a fourth multi-core fiber (24); and
outputting the amplified first optical signal by using the first subset (24-1, 24-3, 24-5) of the fourth multi-core fiber (24), wherein
the first subsets of the multi-core fibers comprise a same quantity of cores.

26. The optical amplification method according to claim 25, further comprising:
receiving a second optical signal by using a second subset (24-2, 24-4, 24-6) of the fourth multi-core fiber (24), wherein a transmission direction of the second optical signal is opposite to a transmission direction of the first optical signal;
transmitting the second optical signal to a second subset (22-2, 22-4, 22-6) of the second multi-core fiber (22);
transmitting the second optical signal coming from the second subset (22-2, 22-4, 22-6) of the second multi-core fiber (22) to a second subset (23-2, 23-4, 23-6) of the third multi-core fiber (23) by using the gain medium (61);
transmitting the amplified second optical signal to a second subset (21-2, 21-4, 21-6) of the first multi-core fiber (21); and
outputting the amplified second optical signal by using the second subset (21-2, 21-4, 21-6) of the first multi-core fiber (21), wherein
the second subsets of the multi-core fibers comprise a same quantity of cores.

27. The method according to claim 26, further comprising:
receiving, by using a third subset (21-7) of the first multi-core fiber (21), a third optical signal used as an auxiliary communications signal, wherein the third subset (21-7) of the first multi-core fiber (21) does not intersect with the first subset (21-1, 21-3, 21-5) or the second subset (21-2, 21-4, 21-6) of the first multi-core fiber (21); and/or
receiving, by using a third subset (24-7) of the fourth multi-core fiber (24), a fourth optical signal used as an auxiliary communications signal, wherein the third subset (24-7) of the fourth multi-core fiber (24) does not intersect with the first subset (24-1, 24-3, 24-5) or the second subset (24-2, 24-4, 24-6) of the fourth multi-core fiber (24).

28. A single-fiber bidirectional transmission method, comprising:
transmitting a first optical signal from a first optical terminal site (80) to an optical amplifier site (90); and
transmitting the amplified first optical signal from the optical amplifier site (90) to a second optical terminal site (81), wherein
the optical amplifier site (90) is disposed in series between the first optical terminal site (80) and the second optical terminal site (81) by using a single fiber, and the optical amplifier site (90) comprises the multi-core fiber amplifier (50) according to any one of claims 12 to 20.

29. The method according to claim 28, further comprising:
transmitting a second optical signal from the second optical terminal site (81) to the optical amplifier site (90); and
transmitting the amplified second optical signal from the optical amplifier site (90) to the second optical terminal site (80).
